# EUROPEAN PATENT APPLICATION

(11) **EP 2 302 243 A1**
(43) Date of publication of application: **30.03.2011**
(21) Application number: 09766674.7
(22) Date of filing: 17.06.2009
(51) Int. Cl.: F16C 33/62, C04B 35/599, F16C 33/32, F16C 33/34, F16D 3/20, F16D 3/205, F16D 3/224

(54) **BEARING PART AND ROLLING BEARING**

(30) Priority: 19.06.2008 JP 2008160443; 19.06.2008 JP 2008160474
(71) Applicant: NTN Corporation, Osaka-shi, Osaka 550-0003 (JP)
(72) Inventor: MURAMATSU, Katsutoshi, Kuwana-shi Mie 511-0811 (JP)
(74) Representative: Bockhorni & Kollegen
(86) International application number: PCT/JP2009/061023
(87) International publication number: WO 2009/154226

(57) **Abstract**

At least one of an outer ring (11), an inner ring (12) and balls (13) can be formed of ceramics capable of suppressing impact on another bearing component more than silicon nitride to provide a bearing component usable in an application where an abruptly varying load is imposed thereon.

## Description

### TECHNICAL FIELD

The present invention relates to a bearing component and a rolling bearing, more particularly, a bearing component formed of a sintered body containing β-sialon, as a main component and a rolling bearing including the bearing component. Furthermore, the present invention relates generally to a torque transmission member for a universal joint and the universal joint, and particularly to a torque transmission member formed of a sintered body containing β-sialon as a main component for a universal joint and the universal joint including the torque transmission member.

### BACKGROUND ART

Silicon nitride, sialon and similar ceramics characteristically not only have a smaller specific gravity and are more corrosive-resistant than steel but are also insulating. Accordingly, if ceramics are adopted as a material for a bearing component that is a component of rolling bearings (including hub units) each including a race member and a rolling element, e.g., the race member, the rolling element, and the like, they can provide bearings and the like reduced in weight and also prevent rolling bearings from having short lives as their components corrode and are thus damaged or electrolytically corrode.

Furthermore, a hub unit, which is a type of rolling bearing, is often used in an environment having a possibility of receiving moisture therein and hence having insufficient lubricity. Ceramic rolling elements, race members and similar bearing components are characteristically less damageable in such an insufficiently lubricating environment as above. Accordingly, for example, a hub unit with a bearing component formed with ceramics adopted as a material can exhibit improved durability when it is employed in an insufficiently lubricating environment.

However, silicon nitride, sialon and similar ceramics require higher production cost than steel, and adopting ceramics as a material for bearing components disadvantageously increases costs of producing rolling bearings.

Furthermore, if ceramics are adopted as a material for a component of a universal joint including a race member and a torque transmission member therefor, e.g., the torque transmission member therefor, they can provide a universal joint reduced in weight and also prevent the universal joint from having short life as the torque transmission member therefor corrodes and is thus damaged or a component electrolytically corrodes.

Furthermore, a universal joint has a torque transmission member therefor rolling and stopping repeatedly on a surface of a race member, and between the torque transmission member and the race member there is not sufficient oil film provided. Furthermore, a universal joint is often used in an environment having a possibility of receiving moisture therein and hence having insufficient lubricity. A ceramic torque transmission member is characteristically less damageable in such an insufficiently lubricating environment as above. Accordingly, for example, a universal joint with a torque transmission member formed with ceramics adopted as a material can exhibit improved durability when it is employed in an insufficiently lubricating environment.

However, silicon nitride, sialon and similar ceramics require higher production cost than steel, and adopting ceramics as a material for components of universal joints disadvantageously increases their production costs.

In recent years, there has been developed a method of producing β-sialon, a type of ceramics, inexpensively by a production process including combustion synthesis (see Japanese Patent Laying-open No. 2004-91272 (Patent Document 1), Japanese Patent Laying-open No. 2005-75652 (Patent Document 2) and Japanese Patent Laying-open No. 2005-194154 (Patent Document 3)). This allows one to consider adopting β-sialon, as a material for components of rolling bearings and universal joints to produce them inexpensively.

### PRIOR ART DOCUMENTS

### PATENT DOCUMENTS

Patent Document 1: Japanese Patent Laying-open No. 2004-91272
Patent Document 2: Japanese Patent Laying-open No. 2005-75652
Patent Document 3: Japanese Patent Laying-open No. 2005-194154

### SUMMARY OF THE INVENTION

### PROBLEMS TO BE SOLVED BY THE INVENTION

To adopt the above β-sialon as a material for a bearing component, however, the bearing component formed of β-sialon must have a sufficient rolling contact fatigue life. Rolling contact fatigue life does not necessarily match a member's fracture strength and the like, and it cannot be said that the bearing component formed of β-sialon necessarily has a sufficient rolling contact fatigue life. Thus it has not been easy either to ensure that a rolling bearing including a bearing component formed of β-sialon, reliably has sufficient durability.

Further, when less elastically deformable β-sialon is adopted as a material for bearing components, pressure of contacted surface between a race member serving as a bearing component and a rolling element serving as a bearing component tends to be large. Hence, when bearing components each formed of β-sialon are adopted for bearing components intended to be used in an application where an abruptly varying load is imposed thereon, pressure on the contact surface between the bearing components exceeds a permissible value, whereby the bearing components may be damaged. As such, β-sialon may not necessarily be suitable for a material of bearing components intended to be used in an application where an abruptly varying load is imposed thereon, for example in an environment where impact resistance is required.

Furthermore, to adopt the above β-sialon as a material for a torque transmission member of a universal joint, however, the torque transmission member formed of β-sialon must have sufficient durability. More specifically, the universal joint has the torque transmission member sliding on a raceway of a race member and therewhile rolling thereon as the universal joint operates. Accordingly the torque transmission member receives rolling and sliding contact fatigue. Durability against rolling and sliding contact fatigue does not necessarily match the torque transmission member's fracture strength and the like, and it cannot be said that the torque transmission member of the universal joint formed of β-sialon necessarily has a sufficient durability against rolling and sliding contact fatigue. Thus it has not been easy either to ensure that a universal joint including a torque transmission member formed of β-sialon reliably has sufficient durability.

Further, when less elastically deformable β-sialon is adopted as a material for torque transmission members, pressure of contacted surface between a race member and a torque transmission member tends to be large. Hence, when torque transmission members each formed of β-sialon are adopted for components of a universal joint intended to be used in an application where an abruptly varying load is imposed thereon, pressure on the contact surface between the race member and the torque transmission member exceeds a permissible value, whereby the race member and the torque transmission member may be damaged. As such, β-sialon may not necessarily be suitable for a material of a torque transmission member intended to be used in an application where an abruptly varying load is imposed thereon, for example in an environment where impact resistance is required.

An object of the present invention is to provide a bearing component formed of a β-sialon sintered body (a sintered body containing β-sialon as a main component) inexpensive, capable of reliably ensuring sufficient durability, and usable in an application where an abruptly varying load is imposed thereon, as well as a rolling bearing (including a hub unit) including such a bearing component.

Another object of the present invention is to provide a torque transmission member formed of a β-sialon sintered body (a sintered body containing β-sialon as a main component) inexpensive, capable of reliably ensuring sufficient durability, and usable in an application where an abruptly varying load is imposed thereon, as well as a universal joint including such a torque transmission member.

### MEANS FOR SOLVING THE PROBLEMS

A bearing component of the present invention is provided in a rolling bearing and is one of a race member and a rolling element disposed in contact with the race member on an annular raceway. The bearing component is formed of ceramic capable of reducing impact upon another bearing component more than silicon nitride.

When the rolling bearing including the present bearing component experiences impact, the other bearing component in contact with the present bearing component can be free from serious damage. The present bearing component can thus enhance the rolling bearing's shock resistance.

A bearing component of one aspect of the present invention is one of a race member and a rolling element disposed in contact with the race member on an annular raceway in a rolling bearing. The bearing component is formed of a sintered body that contains as a main component β-sialon represented by a compositional formula of Si_{6-Z}Al_{Z}O_{Z}N_{8-Z} and satisfying 0.5 ≤ z ≤ 3.0 and that has a remainder formed of an impurity.

A bearing component of another aspect of the present invention is one of a race member and a rolling element disposed in contact with the race member on an annular raceway in a rolling bearing. The bearing component is formed of a sintered body that contains as a main component β-sialon represented by a compositional formula of Si_{6-Z}Al_{Z}O_{Z}N_{8-Z} and satisfying 0.5 ≤ z ≤ 3.0 and that has a remainder formed of a sintering additive and an impurity.

The present inventor has investigated in detail a relationship between the rolling contact fatigue life of a bearing component containing β-sialon as a main component and the bearing component's configuration, and as a result obtained the following finding and arrived at the present invention.

Specifically, by employing a production process including combustion synthesis, β-sialon can be produced which has various compositions with values of z (hereinafter, referred to as "z value") of 0.1 or greater. On the other hand, hardness thereof, which has a great influence over rolling contact fatigue life, is generally hardly changed when the z value is in a range of 4.0 or smaller for easiness of production. It has been found, however, that the rolling contact fatigue life of a bearing component formed of a sintered body containing β sialon as a main component has drastically been decreased when the z value exceeds 3.5, as a result of a detailed investigation on a relationship between the rolling contact fatigue life of the bearing component and the z value.

More specifically, when the z value is in a range of 0.1 or greater but 3.5 or smaller, the rolling contact fatigue life is substantially the same. When time of operation of the rolling bearing exceeds a predetermined period of time, flakes come off on the surface of the bearing component, thus resulting in damage. On the other hand, when the z value exceeds 3.5, the bearing component is likely to be worn, thus resulting in drastically decreased rolling contact fatigue life. In other words, a mode of damage in the bearing component formed of β sialon sintered body is changed with the z value in the composition being 3.5 as a threshold. Namely, there has been found such a phenomenon that the rolling contact fatigue life is decreased drastically when the z value exceeds 3.5. Hence, in order to reliably ensure a sufficient life of the bearing component formed of β sialon sintered body, the z value needs to be 3.5 or smaller.

Meanwhile, as described above, β-sialon can be produced inexpensively by employing a production process including combustion synthesis. However, it has been found that when the z value is less than 0.1, it is difficult to perform combustion synthesis. Hence, the z value needs to be 0.1 or greater in order to produce inexpensively a bearing component formed of β sialon sintered body.

Furthermore, the present inventor has investigated in detail a relationship between how a mating member of a bearing component formed of a β sialon sintered body (a race member or a rolling element in contact with the bearing component formed of the β sialon sintered body) is attacked and the z value with the bearing component experiencing impact, vibration, or similar abrupt load variation. As a result it has been found that when the z value is smaller than 0.5 the mating member is damageable, and that when the z value exceeds 3.0, the bearing component per se formed of the sintered body is damageable.

When the bearing component has a lower z value, the strength of the material constituting the bearing component tends to be increased. However, when the bearing component has a lower z value, the bearing component is less likely to be elastically deformed. Accordingly, an area of contact between bearing components is small, resulting in high pressure on the contacted surface. As a result, when an imposed load is increased abruptly, the bearing component formed of the sintered body and a mating member are likely to be damaged. On the other hand, when the bearing component has a larger z value, the bearing component tends to be elastically deformed, resulting in a large area of contact between bearing components. Accordingly, pressure on the contacted surface is low. However, when the bearing component has a larger z value, the strength of the material constituting the bearing component tends to be decreased. Accordingly, the bearing component per se becomes damageable. Hence, the z value of the bearing component needs to fall within a range that ensures a balance between the strength of the material constituting the bearing component and reduction of pressure on the contacted surface of bearing components.

More specifically, the bearing component formed of the β sialon sintered body having a z value smaller than 0.5 increases the effect of increase of contact pressure. As a result, when a load imposed is abruptly increased by impact, vibration and/or the like, the mating member is deformable or similarly damageable. This results in decreased rolling contact fatigue life of a rolling bearing including the bearing component formed of β sialon sintered body. Accordingly, when used in an application where a load imposed is changed abruptly by impact, vibration and/or the like, the bearing component formed of the β sialon sintered body needs to have a z value equal to or larger than 0.5.

On the other hand, if the bearing component formed of the β sialon sintered body has a z value exceeding 3.0, the influence of reduction in strength of a material constituting the bearing component exceeds the effect of reduction in contact pressure. As a result, when a load imposed is abruptly increased by impact, vibration and/or the like, the bearing component per se formed of β sialon sintered body is damaged resulting in reduced rolling contact fatigue life. In addition, if the z value exceeds 3.0, due to increase in area of contact between the bearing components, frictional force acting between the bearing components is increased to result in increased bearing torque, disadvantageously. Accordingly, when used in an application where a load is changed abruptly, the bearing component formed of the β sialon sintered body needs to have a z value equal to or smaller than 3.0.

In view of this, the bearing component of the one aspect of the present invention is formed of the sintered body that contains as a main component β-sialon represented by a compositional formula of Si_{6-Z}Al_{Z}O_{Z}N_{8-Z} and satisfying 0.5 ≤ z ≤ 3.0 and that has the remainder formed of an impurity. Hence, according to the bearing component of the one aspect of the present invention, there can be provided a bearing component formed of a β sialon sintered body inexpensive, capable of reliably ensuring sufficient durability, and usable in an application where a load imposed is changed abruptly by impact, vibration and/or the like.

When used in an application where an imposed load is relatively large, the bearing component desirably has a z value equal to or smaller than 2.0. On the other hand, when used in an environment where a load imposed significantly varies, e.g., a large impact is externally imposed, the bearing component desirably has a z value equal to or larger than 1.0.

Further, the bearing component of another aspect of the present invention has basically the same configuration as that of the bearing component of the one aspect of the present invention, and provides a similar function and effect. However, in consideration of applications of the bearing component and the like, the bearing component of the another aspect of the present invention is different from the bearing component of the one aspect of the present invention in that it includes a sintering additive. According to the bearing component of another aspect of the present invention, the sintering additive thus adopted is likely to achieve decreased porosity of the sintered body. In this way, there can be readily provided a bearing component formed of a β-sialon sintered body capable of reliably ensuring sufficient durability.

The sintering additive can be selected from at least one of an oxide, a nitride and an oxynitride of magnesium (Mg), aluminum (Al), silicon (Si), titanium (Ti) and a rare earth element. Furthermore, to achieve a function and effect equivalent to that of the bearing component in the one aspect of the present invention, it is desirable that the sintering additive be equal to or smaller than 20% by mass of the sintered body.

The bearing component preferably has a raceway/rolling contact surface serving as a surface contacting another bearing component, the raceway/rolling contact surface being included in a portion having a high density layer higher in density than an inner portion.

The density in the bearing component formed of the sintered body containing β-sialon as a main component has a great influence over the rolling contact fatigue life. In view of this, according to the above configuration, the high density layer, which is a layer having a density higher than that of the inner portion, is provided in the portion including the raceway/rolling contact surface to improve the rolling contact fatigue life. In this way, there can be provided a bearing component formed of a β sialon sintered body capable of reliably ensuring sufficient durability.

Herein, a high density layer is a layer in a sintered body that is low in porosity (or high in density), and can be inspected for example as follows: Initially, the bearing component is cut along a cross section perpendicular to a surface of the bearing component and the cross section is mirror-lapped. The mirror-lapped cross section is then imaged through an optical microscope with oblique illumination (a dark field) at a magnification for example of approximately 50-100 times, and stored in an image equal to or larger than 300 dots per inch (DPI). In doing so, a portion that is white in color is observed as a white color portion, which corresponds to a portion high in porosity (or low in density). Accordingly, a portion having a white color portion having a small area ratio is higher in density than a portion having a white color portion having a large area ratio. An image processor is used to binarize the stored image by a brightness threshold value and a white color portion's area ratio is thus measured and therefrom the imaged portion's density can be obtained.

In other words, the present bearing component preferably has a raceway/rolling contact surface included in a portion having a high density layer having a white color portion having a smaller area ratio than an inner portion does. Note that preferably the imaging is done randomly at at least five locations and the area ratio is evaluated from an average value thereof. Furthermore, the bearing component at an inner portion has a white color portion having an area ratio for example equal to or larger than 15%. Furthermore, to provide the bearing component with further increased rolling contact fatigue life, it is preferable that the high density layer has a thickness equal to or larger than 100 µm.

In the above bearing component preferably when the high density layer is observed in cross section with an optical microscope with oblique illumination, the layer exhibits a portion observed as a portion white in color having an area ratio equal to or smaller than 7%.

The high density layer improved in density to an extent allowing a white color portion to have an area ratio equal to or smaller than 7% provides the bearing component with further increased rolling contact fatigue life. The present bearing component can thus achieve further increased rolling contact fatigue life.

In the above bearing component preferably the high density layer has a surface included in a higher density layer higher in density than another portion of the high density layer.

A higher density layer further higher in density and provided at a portion including a surface of the high density layer can further enhance the bearing component's durability against rolling contact fatigue and thus provide the bearing component with further increased rolling contact fatigue life.

In the above bearing component preferably when the higher density layer is observed in cross section with an optical microscope with oblique illumination, the layer exhibits a portion observed as a portion white in color having an area ratio equal to or smaller than 3.5%.

The higher density layer improved in density to an extent allowing a white color portion to have an area ratio equal to or smaller than 3.5% provides the bearing component with further increased rolling contact fatigue life. The present bearing component can thus achieve further increased rolling contact fatigue life.

The present invention provides a rolling bearing including: a race member; and a plurality of rolling elements disposed in contact with the race member on an annular raceway. At least one of the race member and the rolling element is the bearing component of the present invention as described above.

According to the rolling bearing of the present invention, there can be provided a rolling bearing including a bearing component formed of a β-sialon sintered body inexpensive, capable of reliably ensuring sufficient durability, and usable in an application where an abruptly varying load is imposed thereon.

In the above rolling bearing, one of the race member and the rolling element can be the bearing component of the present invention as described above and the other can be a bearing component formed of steel. In that case, the bearing component of steel preferably has a surface having a hardness equal to or larger than HV 680.

The bearing component formed of steel in contact with that formed of β sialon sintered body can thus be free from serious damage when it receives external impact, experiences vibration or is used similarly in an environment imposing a significantly varying load thereon.

The present invention provides a torque transmission member for a universal joint, provided in a universal joint between a race member connected to a first shaft member and a second shaft member rollably and slidably and transmitting rotation transmitted to one of the first shaft member and the second shaft member about an axis to the other of the first shaft member and the second shaft member. The torque transmission member is formed of ceramic capable of reducing impact upon the race member more than silicon nitride.

When the universal joint including the present torque transmission member for the universal joint experiences impact, the race member in contact with the present torque transmission member for the universal joint can be free from serious damage. The present torque transmission member for the universal joint can thus enhance the universal joint's shock resistance.

The present invention in one aspect provides a torque transmission member for a universal joint, provided in a universal joint between a race member connected to a first shaft member and a second shaft member rollably and slidably and transmitting rotation transmitted to one of the first shaft member and the second shaft member about an axis to the other of the first shaft member and the second shaft member. The torque transmission member for a universal joint is formed of a sintered body that contains as a main component β-sialon represented by a compositional formula of Si_{6-Z}Al_{Z}O_{Z}N_{8-Z} and satisfying 0.5 ≤ z ≤ 3.0 and that has a remainder formed of an impurity,

The present invention in another aspect provides a torque transmission member for a universal joint, provided in a universal joint between a race member connected to a first shaft member and a second shaft member rollably and slidably and transmitting rotation transmitted to one of the first shaft member and the second shaft member about an axis to the other of the first shaft member and the second shaft member. The torque transmission member for a universal joint is formed of a sintered body that contains as a main component β-sialon represented by a compositional formula of So_{6-Z}Al_{Z}O_{Z}N_{8-Z} and satisfying 0.5 ≤ z ≤ 3.0 and that has a remainder formed of a sintering additive and an impurity.

The present inventor has investigated in detail a relationship between the durability of a torque transmission member which contains β-sialon as a main component against rolling and sliding contact fatigue and the torque transmission member's configuration, and as a result obtained the following finding and arrived at the present invention.

Specifically, by employing a production process including combustion synthesis, β-sialons can be produced which has various compositions with values of z (hereinafter, referred to as "z value") of 0.1 or greater. On the other hand, hardness thereof, which has a great influence over durability against rolling and sliding contact fatigue, is generally hardly changed when the z value is in a range of 4.0 or smaller for easiness of production. It has been found, however, that the durability of a torque transmission member formed of a sintered body containing β sialon as a main component against rolling and sliding contact fatigue was drastically decreased when the z value exceeds 3.5, as a result of a detailed investigation on a relationship between the durability of the torque transmission member against rolling and sliding contact fatigue and the z value.

More specifically, when the z value is in a range of 0.1 or greater but 3.5 or smaller, the durability against rolling and sliding contact fatigue is substantially the same. When time of operation of the universal joint exceeds a predetermined period of time, flakes come off on the surface of the torque transmission member, thus resulting in damage. On the other hand, when the z value exceeds 3.5, the torque transmission member is likely to be worn, thus resulting in drastically decreased durability against rolling and sliding contact fatigue. In other words, a mode of damage in the torque transmission member formed of β sialon sintered body is changed with the z value in the composition being 3.5 as a threshold. Namely, there has been found such a phenomenon that the durability against rolling and sliding contact fatigue is decreased drastically when the z value exceeds 3.5. Hence, in order to reliably ensure a sufficient durability of the torque transmission member formed of β sialon sintered body against rolling and sliding contact fatigue, the z value needs to be 3.5 or smaller.

Meanwhile, as described above, β-sialon can be produced inexpensively by employing a production process including combustion synthesis. However, it has been found that when the z value is less than 0.1, it is difficult to perform combustion synthesis. Hence, the z value needs to be 0.1 or greater in order to produce inexpensively a torque transmission member formed of β sialon sintered body.

Furthermore, the present inventor has investigated in detail a relationship between how a mating member of a torque transmission member formed of a β sialon sintered body (e.g., a race member in contact with the torque transmission member formed of the β sialon sintered body) is attacked and the z value with the universal joint experiencing impact, vibration, or similar abrupt load variation. As a result it has been found that when the z value is smaller than 0.5 the mating member is damageable, and that when the z value exceeds 3.0, the torque transmission member is damageable.

More specifically, when the torque transmission member has a lower z value, the strength of the material constituting the torque transmission member tends to be increased. However, when the torque transmission member has a lower z value, the torque transmission member is less likely to be elastically deformed. Accordingly, an area of contact between the torque transmission member and a mating member is small, resulting in high pressure on the contacted surface. As a result, when an imposed load is increased abruptly, the torque transmission member and the mating member are likely to be damaged. On the other hand, when the torque transmission member has a larger z value, the torque transmission member tends to be elastically deformed, resulting in a large area of contact between the torque transmission member and a mating member. Accordingly, pressure on the contacted surface is low. However, when the torque transmission member has a larger z value, the strength of the material constituting the torque transmission member tends to be decreased. Accordingly, the torque transmission member per se becomes damageable. Hence, the z value of the torque transmission member needs to fall within a range that ensures a balance between the strength of the material constituting the torque transmission member and reduction of pressure on the contacted surface of the torque transmission member and the mating member.

More specifically, the torque transmission member formed of the β sialon sintered body having a z value smaller than 0.5 increases the effect of increase of contact pressure. As a result, when a load imposed is abruptly increased by impact, vibration and/or the like, the mating member is deformable or similarly damageable. This results in decreased durability of a universal joint including a torque transmission member formed of β sialon sintered body against rolling and sliding contact fatigue. Accordingly, when used in an application where a load imposed is changed abruptly by impact, vibration and/or the like, the torque transmission member formed of the β sialon sintered body needs to have a z value equal to or larger than 0.5.

On the other hand, if the torque transmission member formed of the β sialon sintered body has a z value exceeding 3.0, the influence of reduction in strength of a material constituting the torque transmission member exceeds the effect of reduction in contact pressure. As a result, when a load imposed is abruptly increased by impact, vibration and/or the like, the torque transmission member formed of β sialon sintered body is damaged resulting in reduced durability against rolling and sliding contact fatigue. Accordingly, when used in an application where an abruptly varying load is imposed thereon, the torque transmission member formed of the β sialon sintered body needs to have a z value equal to or smaller than 3.0.

In view of this, the torque transmission member for a universal joint of the one aspect of the present invention is formed of the sintered body that contains as a main component β-sialon represented by a compositional formula of Si_{6-Z}Al_{Z}O_{Z}N_{8-Z} and satisfying 0.5 ≤ z ≤ 3.0 and that has the remainder formed of an impurity. Hence, according to the torque transmission member for a universal joint of the one aspect of the present invention, there can be provided a torque transmission member for a universal joint formed of a β sialon sintered body inexpensive, capable of reliably ensuring sufficient durability, and usable in an application where a load imposed is changed abruptly by impact, vibration and/or the like.

When used in an application where an imposed load is relatively large, the torque transmission member for a universal joint desirably has a z value equal to or smaller than 2.0. On the other hand, when used in an environment where a load imposed significantly varies, e.g., a large impact is externally imposed, the torque transmission member for a universal joint desirably has a z value equal to or larger than 1.0.

Further, the torque transmission member for a universal joint of another aspect of the present invention has basically the same configuration as that of the torque transmission member for a universal joint of the one aspect of the present invention, and provides a similar function and effect. However, in consideration of applications of the torque transmission member for a universal joint and the like, the torque transmission member for a universal joint of the another aspect of the present invention is different from the torque transmission member for a universal joint of the one aspect of the present invention in that it includes a sintering additive. According to the torque transmission member for a universal joint of another aspect of the present invention, the sintering additive thus adopted is likely to achieve decreased porosity of the sintered body. In this way, there can be readily provided a torque transmission member for a universal joint formed of a β-sialon sintered body capable of reliably ensuring sufficient durability.

The sintering additive can be selected from at least one of an oxide, a nitride and an oxynitride of magnesium (Mg), aluminum (Al), silicon (Si), titanium (Ti) and a rare earth element. Furthermore, to achieve a function and effect equivalent to that of the torque transmission member for a universal joint in the one aspect of the present invention, it is desirable that the sintering additive be equal to or smaller than 20% by mass of the sintered body.

The torque transmission member for a universal joint preferably has a contact surface serving as a surface contacting another member, the contact surface being included in a portion having a high density layer higher in density than an inner portion.

The density in the torque transmission member for a universal joint formed of the sintered body containing β-sialon as a main component has a great influence over the durability against rolling and sliding contact fatigue. In view of this, according to the above configuration, the high density layer, which is a layer having a density higher than that of the inner portion, is provided in the portion including the contact surface to improve the durability against rolling and sliding contact fatigue. In this way, there can be provided a torque transmission member for a universal joint formed of a β sialon sintered body capable of reliably ensuring sufficient durability.

Herein, a high density layer is a layer in a sintered body that is low in porosity (or high in density), and can be inspected for example as follows. Initially, the torque transmission member for a universal joint is cut along a cross section perpendicular to a surface of the torque transmission member for the universal joint and the cross section is mirror-lapped. The mirror-lapped cross section is then imaged through an optical microscope with oblique illumination (a dark field) at a magnification for example of approximately 50-100 times, and stored in an image equal to or larger than 300 dots per inch (DPI). In doing so, a portion that is white in color is observed as a white color portion, which corresponds to a portion high in porosity (or low in density). Accordingly, a portion having a white color portion having a small area ratio is higher in density than a portion having a white color portion having a large area ratio. An image processor is used to binarize the stored image by a brightness threshold value and a white color portion's area ratio is thus measured and therefrom the imaged portion's density can be obtained.

In other words, the present torque transmission member for a universal joint preferably has a contact surface included in a portion having a high density layer having a white color portion having a smaller area ratio than an inner portion does. Note that preferably the imaging is done randomly at at least five locations and the area ratio is evaluated from an average value thereof. Furthermore, the torque transmission member for a universal joint at an inner portion has a white color portion having an area ratio for example equal to or larger than 15%. Furthermore, to provide the torque transmission member for a universal joint with further increased durability against rolling and sliding contact fatigue, it is preferable that the high density layer has a thickness equal to or larger than 100 µm.

In the above torque transmission member for a universal joint preferably when the high density layer is observed in cross section with an optical microscope with oblique illumination, the layer exhibits a portion observed as a portion white in color having an area ratio equal to or smaller than 7%.

The high density layer improved in density to an extent allowing a white color portion to have an area ratio equal to or smaller than 7% provides the torque transmission member for a universal joint with further increased durability against rolling and sliding contact fatigue. The present torque transmission member for a universal joint can thus achieve further increased durability against rolling and sliding contact fatigue.

In the above torque transmission member for a universal joint preferably the high density layer has a surface included in a higher density layer higher in density than another portion of the high density layer.

A higher density layer further higher in density and provided at a portion including a surface of the high density layer can further enhance the torque transmission member's durability against rolling and sliding contact fatigue.

In the above torque transmission member for a universal joint preferably when the higher density layer is observed in cross section with an optical microscope with oblique illumination, the layer exhibits a portion observed as a portion white in color having an area ratio equal to or smaller than 3.5%.

The higher density layer improved in density to an extent allowing a white color portion to have an area ratio equal to or smaller than 3.5% provides the torque transmission member for a universal joint with further increased durability against rolling and sliding contact fatigue.

The present invention provides a universal joint including: a race member connected to a first shaft member; a torque transmission member arranged in contact with the race member rollably and slidably on a surface of the race member; and a second shaft member connected via the torque transmission member and the race member to the first shaft member. The universal joint transmits rotation transmitted to one of the first shaft member and the second shaft member about an axis to the other of the first shaft member and the second shaft member. The torque transmission member is the torque transmission member that is provided for a universal joint in accordance with the present invention as described above.

According to the universal joint of the present invention, there can be provided a universal joint including a torque transmission member for a universal joint formed of a β-sialon sintered body inexpensive, capable of reliably ensuring sufficient durability, and usable in an application where an abruptly varying load is imposed thereon.

In the above universal joint, the race member can be formed of steel. In that case, the race member preferably has a surface having a hardness equal to or larger than HV 680.

The race member formed of steel can thus be free from serious damage when it receives external impact, experiences vibration or is used similarly in an environment imposing a significantly varying load thereon.

### EFFECTS OF THE INVENTION

As apparent from the above description, according to the bearing component and the rolling bearing of the present invention, there can be provided a bearing component formed of a β-sialon sintered body inexpensive, capable of reliably ensuring sufficient durability, and usable in an application where an abruptly varying load is imposed thereon, as well as a rolling bearing including such a bearing component.

According to the torque transmission member for a universal joint and the universal joint of the present invention, there can be provided a torque transmission member for a universal joint formed of a β-sialon sintered body inexpensive, capable of reliably ensuring sufficient durability, and usable in an application where an abruptly varying load is imposed thereon, as well as a universal joint including such a torque transmission member for a universal joint.

### BRIEF DESCRIPTION OF THE DRAWINGS

Fig. 1 is a schematic cross section of a configuration of a deep groove ball bearing in a first embodiment.
Fig. 2 is an enlarged schematic partial cross section of a main portion of Fig. 1.
Fig. 3 is a schematic cross section of a configuration of a thrust needle roller bearing in an exemplary variation of the first embodiment.
Fig. 4 is an enlarged schematic partial cross section of a main portion of a bearing washer that the thrust needle roller bearing of Fig. 3 includes.
Fig. 5 is an enlarged schematic cross section of a needle roller that the thrust needle roller bearing of Fig. 3 includes.
Fig. 6 generally represents a method of producing a rolling bearing in the first embodiment.
Fig. 7 generally represents a method of producing a bearing component, as included in the method of producing a rolling bearing in the first embodiment.
Fig. 8 is a schematic cross section of a configuration of a hub unit, which is a rolling bearing in a second embodiment.
Fig. 9 is an enlarged schematic partial cross section of a main portion of Fig. 8.
Fig. 10 is a schematic cross section of a configuration of a constant velocity joint (a fixed joint) in a third embodiment.
Fig. 11 is a schematic cross section taken along a line XI-XI shown in Fig. 10.
Fig. 12 is a schematic cross section of the Fig. 10 fixed joint forming an angle.
Fig. 13 is an enlarged schematic partial cross section of a main portion of Fig. 10.
Fig. 14 is an enlarged schematic partial cross section of a main portion of Fig. 11.
Fig. 15 generally represents a method of producing a universal joint in the third embodiment.
Fig. 16 generally represents a method of producing a torque transmission member for a universal joint, as included in the method of producing a universal joint in the third embodiment.
Fig. 17 is a schematic cross section of a configuration of a constant velocity joint (a tripod joint) in a fourth embodiment.
Fig. 18 is a schematic cross section taken along a line XVIII-XVIII shown in Fig. 17.
Fig. 19 is an enlarged schematic partial cross section of a main portion of Fig. 18.
Fig. 20 is a photograph of a specimen for observation in cross section, as shot via an optical microscope with oblique illumination.
Fig. 21 shows one example of binarizing the photographic image of Fig. 20 by a brightness threshold value using image processing software.
Fig. 22 shows a region subjected to an image process (a region to be evaluated) in binarizing the photographic image of Fig. 20 by the brightness threshold value using the image processing software to measure an area ratio of a white color portion.

### MODES FOR CARRYING OUT THE INVENTION

Hereinafter reference will be made to the drawings to describe the present invention in embodiments. In the figures, identical or corresponding components are identically denoted and will not be described repeatedly.

### First Embodiment

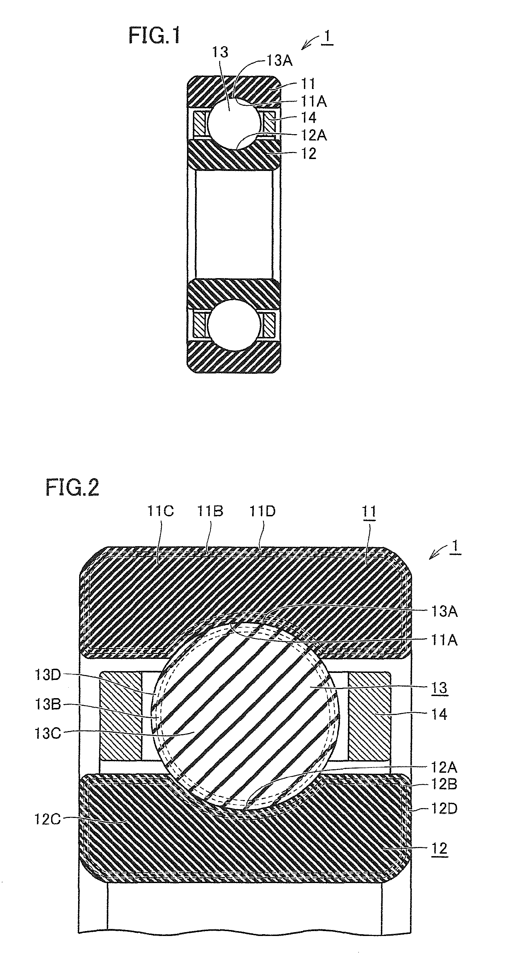

Initially reference will be made to Fig. 1 and Fig. 2 to describe a deep groove ball bearing implementing a rolling bearing in a first embodiment.

With reference to Fig. 1, a deep groove ball bearing 1 includes a race member implemented as an annular outer ring 11, a race member implemented as an annular inner ring 12 arranged to be inner than outer ring 11, and rolling elements implemented as a plurality of balls 13 arranged between outer and inner rings 11 and 12 and held in an annular cage 14. Outer ring 11 has an inner circumferential surface having an outer ring raceway surface 11A and inner ring 12 has an outer circumferential surface having an inner ring raceway surface 12A. Outer ring 11 and inner ring 12 are disposed such that inner ring raceway surface 12A and outer ring raceway surface 11A face each other. The plurality of balls 13 have rolling contact surfaces 13A in contact with inner ring raceway surface 12A and outer ring raceway surface 11A, and are disposed at a predetermined pitch in the circumferential direction by means of cage 14, thus being held in a rollable manner on an annular raceway. By such a configuration, outer ring 11 and inner ring 12 of deep groove ball bearing 1 can be rotated relative to each other.

Herein, with reference to Fig. 2, the present embodiment provides bearing components implemented as outer ring 11, inner ring 12 and ball 13 each formed of a sintered body that contains as a main component β-sialon represented by a compositional formula of Si_{6-Z}Al_{Z}O_{Z}N_{8-Z} and satisfying 0.5 ≤ z ≤ 3.0 and that has a remainder formed of an impurity. Furthermore, outer ring 11, inner ring 12 and ball 13 have outer ring raceway surface 11A, inner ring raceway surface 12A and ball rolling contact surface 13A, respectively, included in a portion provided with an outer ring high density layer 11B, an inner ring high density layer 12B and a ball high density layer 13B higher in density than inner portions 11C, 12C, 13C. When outer ring high density layer 11B, inner ring high density layer 12B and ball high density layer 13B are observed in cross section with an optical microscope with oblique illumination, they exhibit a portion white in color, hereinafter also referred to as a white color portion, having an area ratio equal to or smaller than 7%. The present embodiment thus provides deep groove ball bearing 1 that serves as a rolling bearing including a bearing component (outer ring 11, inner ring 12 and ball 13) formed of a β-sialon sintered body inexpensive, capable of reliably ensuring sufficient durability, and usable in an application where an abruptly varying load is imposed thereon. The impurity includes an unavoidably introduced impurity including those derived from a source material or entering during the production process.

Note that in the present embodiment, the bearing component implemented as outer ring 11, inner ring 12 and ball 13 may be formed of a sintered body that contains β-sialon as a main component and has a remainder formed of a sintering additive and an impurity. The sintering additive helps to reduce the sintered body in porosity and hence provide a rolling bearing including a bearing component formed of a β-sialon, sintered body capable of reliably ensuring sufficient durability. The impurity includes an unavoidably introduced impurity including those derived from a source material or entering during the production process.

Furthermore, with reference to Fig. 2, outer ring high density layer 11B, inner ring high density layer 12B and ball high density layer 13B have surfaces, or outer ring raceway surface 11A, inner ring raceway surface 12A and ball rolling contact surface 13A, respectively, included in a portion provided with an outer ring higher density layer 11D, an inner ring higher density layer 12D and a ball higher density layer 13D further higher in density than the other portions of outer ring high density layer 11B, inner ring high density layer 12B and ball high density layer 13B. When outer ring higher density layer 11D, inner ring higher density layer 12D and ball higher density layer 13D are observed in cross section with an optical microscope with oblique illumination, they exhibit a white color portion having an area ratio equal to or smaller than 3.5%. Outer ring 11, inner ring 12 and ball 13 are thus further improved in durability against rolling contact fatigue and thus achieve further improved rolling contact fatigue life.

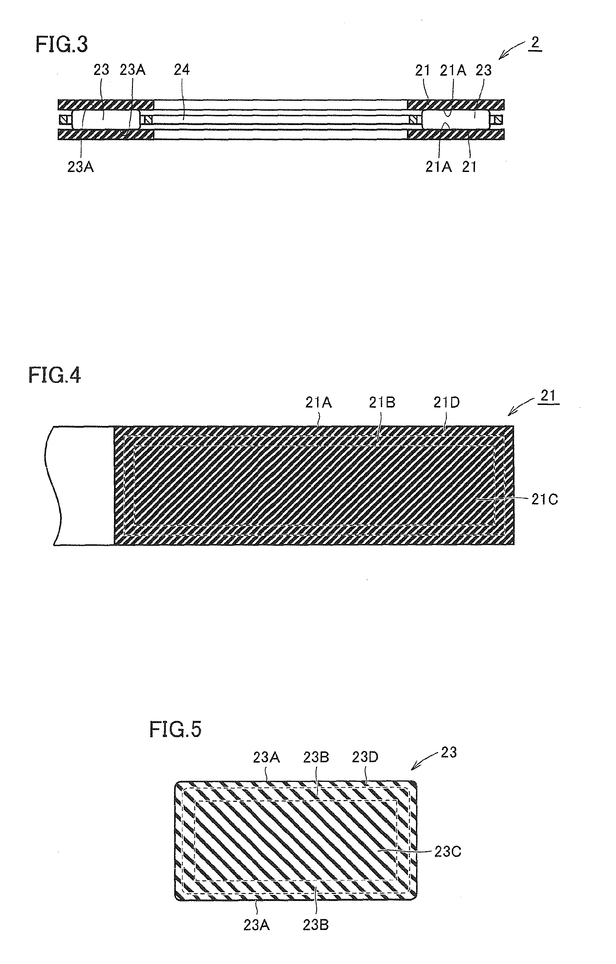

Hereinafter reference will be made to Fig. 3 to Fig. 5 to describe a thrust needle roller bearing serving as a rolling bearing in an exemplary variation of the first embodiment.

With reference to Fig. 3 to Fig. 5, a thrust needle roller bearing 2 has a configuration basically similar to deep groove ball bearing 1 described with reference to Fig. 1, and has an effect similar to that of deep groove ball bearing 1, except that the former includes a race member and a rolling element different in configuration than the latter. More specifically, thrust needle roller bearing 2 includes a pair of bearing washers 21 in the form of a disk, serving as race members arranged such that their respective, one main surfaces face each other, a plurality of needle rollers 23 serving as a rolling element, and an annular cage 24. The plurality of needle rollers 23 have their respective outer circumferential surfaces or rolling contact surfaces 23A in contact with bearing washer raceway surface 21A formed at the main surfaces of the pair of bearing washers 21 facing each other, and are disposed at a predetermined pitch in the circumferential direction by means of cage 24, thus being held in a rollable manner on an annular raceway. By such a configuration, the pair of bearing washers 21 of thrust needle roller bearing 2 can be rotated relative to each other.

Herein in the present exemplary variation, the bearing components implemented as bearing washer 21 and needle roller 23 correspond to outer ring 11 or inner ring 12 and ball 13 described above, respectively, are formed of similar β sialon sintered body, and have similar inner portions 21C, 23C, high density layers (a bearing washer high density layer 21B, a roller high density layer 23B), and higher density layers (a bearing washer higher density layer 21D, a roller higher density layer 23D). Thus the present exemplary variation provides thrust needle roller bearing 2 that is a rolling bearing including bearing components (bearing washer 21, needle roller 23) each formed of a β-sialon sintered body inexpensive, capable of reliably ensuring sufficient durability, and usable in an application where an abruptly varying load is imposed thereon.

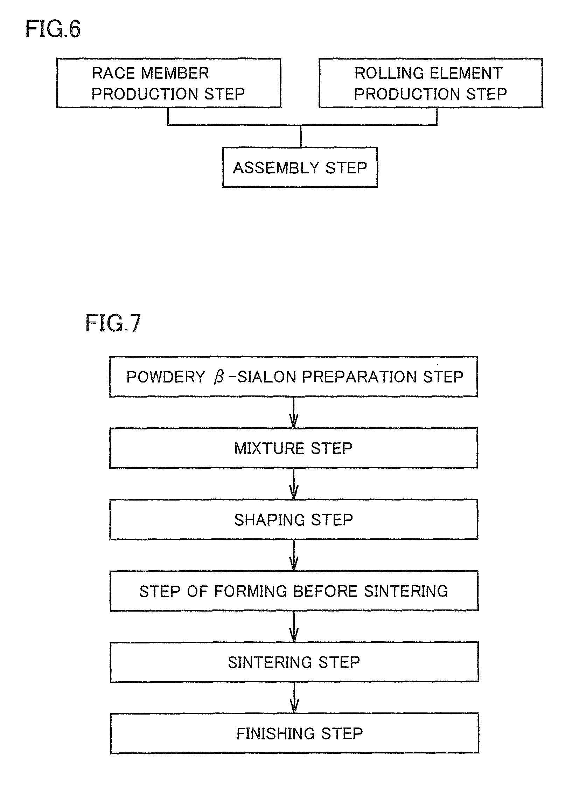

The following will describe a method for producing a rolling bearing in the first embodiment serving as one embodiment of the present invention. With reference to Fig. 6, in the present embodiment, a rolling bearing is produced in a method, as follows. Initially, a race member is produced in a race member production step and a rolling element is produced in a rolling element production step. More specifically the race member production step is performed to produce outer ring 11, inner ring 12, bearing washer 21 and the like. The rolling element production step is performed to produce ball 13, needle roller 23 and the like.

Then an assembly step is performed to combine the race member produced in the race member production step and the rolling element produced in the rolling element production step together to assemble a rolling bearing. More specifically, for example, outer ring 11 and inner ring 12, and ball 13 are combined together to assemble deep groove ball bearing 1. The race member production step and the rolling element production step are performed for example in accordance with a method of producing a bearing component, as will be described hereinafter.

With reference to Fig. 7, in the present embodiment, a bearing component is produced in a method, as follows. Initially, powdery β-sialon is prepared in a powdery β-sialon preparation step. In the powdery β-sialon preparation step, for example a production process including combustion synthesis can be performed to inexpensively produce powder of β-sialon that is represented by a compositional formula of Si_{6-Z}Al_{Z}O_{Z}N_{8-Z} and satisfies 0.5 ≤ z ≤ 3.0.

A mixture step is then performed to add a sintering additive to the powdery β-sialon prepared in the powdery β-sialon preparation step and mix them together. The mixture step can be omitted if the sintering additive is not added.

Then, with reference to Fig. 7, a shaping step is performed to shape the powdery β-sialon or the mixture of the powdery β-sialon and the sintering additive generally into the geometry of each bearing component. More specifically, the powdery β-sialon or the mixture of the powdery β-sialon and the sintering additive is press-formed, cast-molded, extrusion-formed, rolling-granulated, or similarly shaped to provide a body shaped generally into the geometry of each bearing component implemented as outer ring 11, inner ring 12, ball 13, bearing washer 21, needle roller 23 and the like.

The step of forming before sintering is then performed to form a surface of the shaped body to allow the shaped body that has been sintered to have a geometry closer to that of a bearing component as desired. More specifically, green body forming or a similar forming technique is used to process the shaped body so that the shaped body having been sintered can have a geometry closer to that of outer ring 11, inner ring 12, ball 13, bearing washer 21, needle roller 23 or the like. The step of forming before sintering can be omitted if the shaping step provides a shaped body in a condition allowing the shaped body that has been sintered to have a geometry sufficiently close to that of a bearing component as desired.

Then, with reference to Fig. 7, a sintering step is performed to sinter the shaped body. More specifically, the shaped body is for example heated with a heater, a microwave, a millimeter wave or a similar electromagnetic wave and thus sintered at a pressure equal to or smaller than 1 MPa to provide a sintered body generally having a geometry of outer ring 11, inner ring 12, ball 13, bearing washer 21, needle roller 23 or the like. The shaped body is sintered by being heated in an atmosphere of an inert gas or that of a gaseous mixture of nitrogen and oxygen to a range of 1550°C to 1800°C. The inert gas can be helium, neon, argon, nitrogen or the like. In view of production cost reduction, nitrogen is preferably adopted.

Then the sintered body produced in the sintering step has a surface worked to remove a portion including that surface, i.e., it is worked for finish, to complete bearing components, i.e., a finishing step is performed. More specifically, the sintered body produced in the sintering step has a surface polished to complete a bearing component implemented as outer ring 11, inner ring 12, ball 13, bearing washer 21, needle roller 23 and the like. Through the above steps the bearing component in the present embodiment completes.

As a result of the sintering step, in the sintered body at a portion from its surface to a depth of approximately 500 µm, there is formed a high density layer higher in density than an inner portion and having a portion white in color, or a white color portion, as observed in cross section with an optical microscope with oblique illumination, having an area ratio equal to or smaller than 7%. Furthermore, the sintered body has, at a portion from its surface to a depth of approximately 150 µm, a higher density layer further higher in density than the other portion of the high density layer and having a portion white in color, or a white color portion, as observed in cross section with an optical microscope with oblique illumination, having an area ratio equal to or smaller than 3.5%. Accordingly in the finishing step the sintered body is removed preferably by a thickness equal to or smaller than 150 µm in a portion that should serve as a raceway/rolling contact surface in particular. This allows the higher density layer to remain in a portion including outer ring raceway surface 11A, inner ring raceway surface 12A, ball rolling contact surface 13A, bearing washer raceway surface 21A and roller rolling contact surface 23A to provide the bearing component with improved rolling contact fatigue life.

Note that the step of sintering the shaped body is performed preferably at a pressure equal to or larger than 0.01 MPa to reduce or prevent decomposition of β-sialon, and more preferably at a pressure equal to or larger than the atmospheric pressure when cost reduction is considered. Furthermore, to provide the high density layer while reducing production cost, the step of sintering the shaped body is performed preferably at a pressure equal to or smaller than 1 MPa.

### Second Embodiment

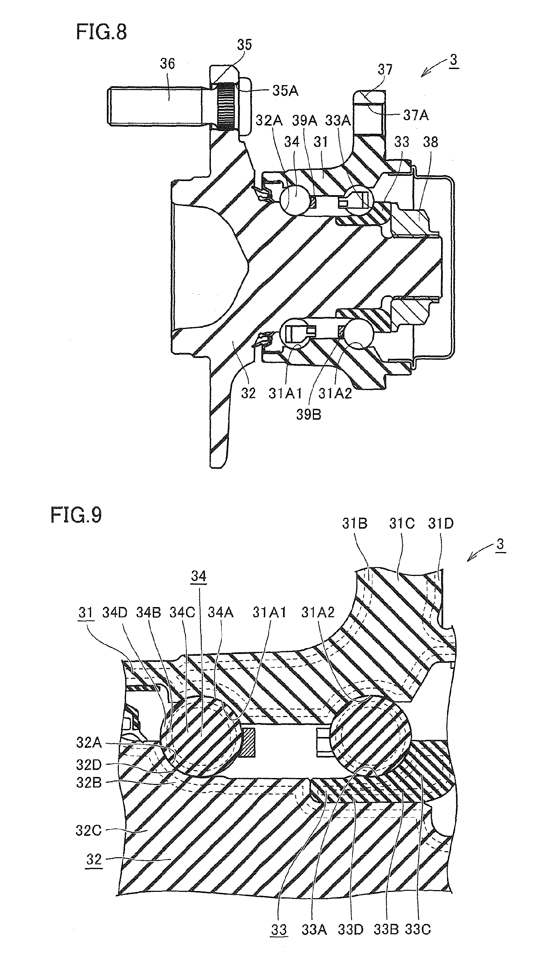

A second embodiment provides a hub unit, as will be described hereinafter. With reference to Figs. 8 and 9, a hub unit 3 has a configuration basically similar to deep groove ball bearing 1 described with reference to Fig. 1, and has an effect similar to that of deep groove ball bearing 1, except that the former includes a race member and a rolling element different in configuration than the latter. More specifically, hub unit 3 is a device posed between a vehicular wheel and a vehicular body and rotatably supporting the wheel relative to the body. Hub unit 3 includes a race member implemented as an outer ring 31, a hub ring 32 and an inner ring 33, and a rolling element implemented as a plurality of balls 34.

Outer ring 31, serving as an outer member, is an annular race member having an inner circumferential surface provided with two rows of raceway surfaces 31A1, 31A2. Hub ring 32, serving as an inner member, is a race member having a raceway surface 32A opposite to one raceway surface 31A1 of outer ring 31 and disposed to have a portion surrounded by outer ring 31. Furthermore, inner ring 33, serving as an inner member, is an annular race member that has a raceway surface 33A opposite to the other raceway surface 31A2 of outer ring 31, and is fitted in in contact with a portion of an outer circumferential surface of hub ring 32, and fixed to hub ring 32 by a fixing ring 38 fitted in in contact with a portion of an outer circumferential surface of hub ring 32.

The plurality of balls 34 are rotatably arranged on an annular raceway of a plurality of (two) rows. One row is in contact with one raceway surface 31A1 of outer ring 31 and raceway surface 32A of hub ring 32 and arranged by an annular cage 39A in a circumferential direction at a predetermined pitch. The other row is in contact with the other raceway surface 31A2 of outer ring 31 and raceway surface 33A of inner ring 33 and arranged by an annular cage 39B in a circumferential direction at a predetermined pitch. The outer member implemented as outer ring 31 and the inner member implemented as hub ring 32 and inner ring 33 can thus rotate relative to each other.

Furthermore, hub ring 32 has a hub ring flange 35 having a hub ring through hole 35A. Hub ring through hole 35A receives a bolt 36 to fix hub ring flange 35 and a vehicular wheel (not shown) to each other. Outer ring 31 has an outer ring flange 37 having an outer ring through hole 37A. Outer ring through hole 37A receives a bolt (not shown) to fix outer ring flange 37 and a suspension device (not shown) that is fixed to the vehicular body to each other. Thus hub unit 3 is posed between the vehicular wheel and the vehicular body to support the wheel relative to the body rotatably.

In other words, the present embodiment provides hub unit 3 that is a hub unit posed between a vehicular wheel and a vehicular body to support the wheel relative to the body rotatably. Hub unit 3 includes: an outer member implemented as outer ring 31 having an inner circumferential surface provided with annular raceway surface 31A1, 31A2; an inner member implemented as hub ring 32 provided with annular raceway surface 32A opposite to raceway surface 31A1 of outer ring 31 and disposed with at least a portion thereof surrounded by an inner circumferential surface of outer ring 31; and an inner member implemented as inner ring 33 provided with annular raceway surface 33A opposite to raceway surface 31A2 of outer ring 31 and disposed with at least a portion thereof surrounded by an inner circumferential surface of outer ring 31. Furthermore, hub unit 3 includes a plurality of balls 34 arranged on an annular raceway and in contact at a ball rolling contact surface 34A with outer ring 31 at raceway surfaces 31A1, 31A2 and hub ring 32 and inner ring 33 at raceway surfaces 32A, 33A.

Herein, with reference to Fig. 8 and Fig. 9, the present embodiment provides a bearing component (a bearing component for a hub unit) implemented as outer ring 31, hub ring 32 and inner ring 33, and ball 34, which correspond respectively to outer ring 11 and inner ring 12, and ball 13 of the first embodiment, are formed of similar beta sialon sintered body, and similarly have inner portions 31C, 32C, 33C, 34C, a high density layer (an outer ring high density layer 31B, a hub ring high density layer 32B, an inner ring high density layer 33B, a ball high density layer 34B) and a higher density layer (an outer ring higher density layer 31D, a hub ring higher density layer 32D, an inner ring higher density layer 33D, a ball higher density layer 34D). Thus the present embodiment provides hub unit 3 that is a rolling bearing including a bearing component (outer ring 31, hub ring 32, inner ring 33, ball 34) formed of a β-sialon sintered body inexpensive, capable of reliably ensuring sufficient durability, and usable in an application where an abruptly varying load is imposed thereon. Note that the rolling bearing implemented in the second embodiment as hub unit 3 and the bearing component implemented in the same embodiment as outer ring 31, hub ring 32, inner ring 33, ball 34 that hub unit 3 includes in the same embodiment can be produced similarly as they are produced in the first embodiment.

As exemplary rolling bearings and bearing components of the present invention, the embodiments described above provide the deep groove ball bearing, the thrust needle roller bearing, and the hub unit, as well as the bearing components provided therein, but the rolling bearings of the present invention are not limited to these. For example, the race member may be a shaft or plate used to allow a rolling element to roll on the surface thereof. In other words, the race member, which is a bearing component of the present invention, may be any member having a raceway surface on which a rolling element rolls. In addition, the rolling bearing of the present invention may be a thrust ball bearing or a radial roller bearing.

Further, the above-described embodiments has been described for a case where each of the race member and the rolling element in each rolling bearing of the present invention corresponds to the bearing component formed of β-sialon sintered body in the present invention, but the rolling bearing of the present invention is not limited to this. In the rolling bearing of the present invention, at least one of the race member and the rolling element may correspond to the bearing component of the present invention. Where one of the race member and the rolling element corresponds to the bearing component of the present invention, it is preferable that the rolling element correspond to the bearing component of the present invention, in consideration of production cost of the rolling bearing.

In this case, the material for the race member of the rolling bearing of the present invention is not particularly limited. Examples usable therefor are steel, specifically, bearing steel such as SUJ2 of the JIS Standard, high carbon steel such as S53C, or case hardening steel such as SCr420 or SCM420.

Further, the bearing component and the rolling bearing of the present invention are particularly suitable as a bearing component and a rolling bearing both used in an environment in which an imposed load is abruptly changed. Specifically, the bearing component and the rolling bearing of the present invention are particularly suitable as, for example, the above-described bearing component for a hub unit and the hub unit including the bearing component; a bearing component used for a bearing for an electric tool to rotatably support a spindle of the electric tool relative to a member disposed opposite to the spindle, and the bearing used for the electric tool and including the bearing component; a vehicular bearing component used for a bearing of a transmission, an engine, an electrical accessory and/or the like of a vehicle, and a bearing provided for a vehicle and including the bearing component; a bearing component used for a bearing of an engine of an aircraft, and a bearing for an engine of an aircraft including the bearing component; a bearing component for a touch-down bearing for a magnetic bearing apparatus in which a bearing ring is disposed opposite to a rotation member supported by a magnetic bearing, and the touch-down bearing used for the magnetic bearing apparatus and including the bearing component for the touch-down bearing; and a bearing component used for a bearing for a windmill to rotatably support a main shaft of the windmill or a rotation member, which rotates according to rotation of the main shaft, relative to a member disposed opposite to the main shaft or the rotation member, and the bearing used for the windmill and including the bearing component for the windmill.

### Third Embodiment

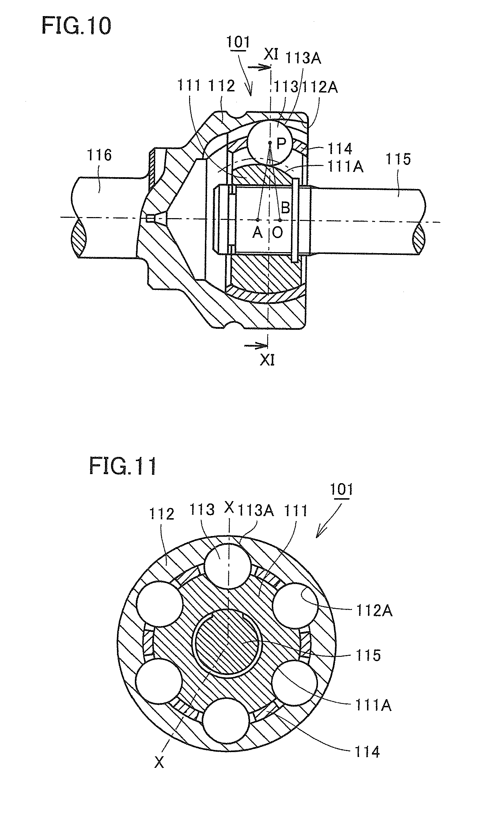

With reference to Fig. 10 to Fig. 14, the present invention in a third embodiment provides a universal joint implemented as a fixed joint.

With reference to Fig. 10, the third embodiment provides a fixed joint 101 including a race member implemented as an inner race 111 coupled to a second shaft implemented as a shaft 115, a race member implemented as an outer race 112 arranged to surround the outer circumferential side of inner race 111 and coupled to a first shaft implemented as a shaft 116, a torque transmission member implemented as a ball 113 arranged between inner race 111 and outer race 112, and a cage 114 holding ball 113. Ball 113 is arranged with a surface, or a ball contact surface 113A, in contact with an inner race ball groove 111A formed at the outer circumferential surface of inner race 111 and an outer race ball groove 112A formed at the inner circumferential surface of outer race 112, and is held by cage 114 to avoid falling off.

As shown in Fig. 10, inner race ball groove 111A and outer race ball groove 112A located at the outer circumferential surface of inner race 111 and the inner circumferential surface of outer race 112, respectively, are formed in a curve (arc) with points A and B equally spaced apart at the left and right on the axis passing through the center of shafts 115 and 116 in a straight line from the joint center O on the axis as the center of curvature. In other words, inner race ball groove 111A and outer race ball groove 112A are formed such that the trajectory of center P of ball 113 that rolls in contact with inner race ball groove 111A and outer race ball groove 112A corresponds to a curve (arc) with point A (inner race center A) and point B (outer race center B) as the center of curvature. Accordingly, ball 113 is constantly located on the bisector of an angle (∠ AOB) with respect to the axis passing through the center of shafts 115 and 116 even when the fixed joint forms an angle (when the fixed joint operates such that the axes passing through the center of shafts 115 and 116 cross).

Fixed joint 101 operates, as will be described hereinafter. With reference to Figs. 10 and 11, when the rotation about the axis is transmitted to one of shafts 115 and 116 at fixed joint 101, this rotation is transmitted to the other of shafts 115 and 116 via ball 113 fitted in inner race ball groove 111A and outer race ball groove 112A.

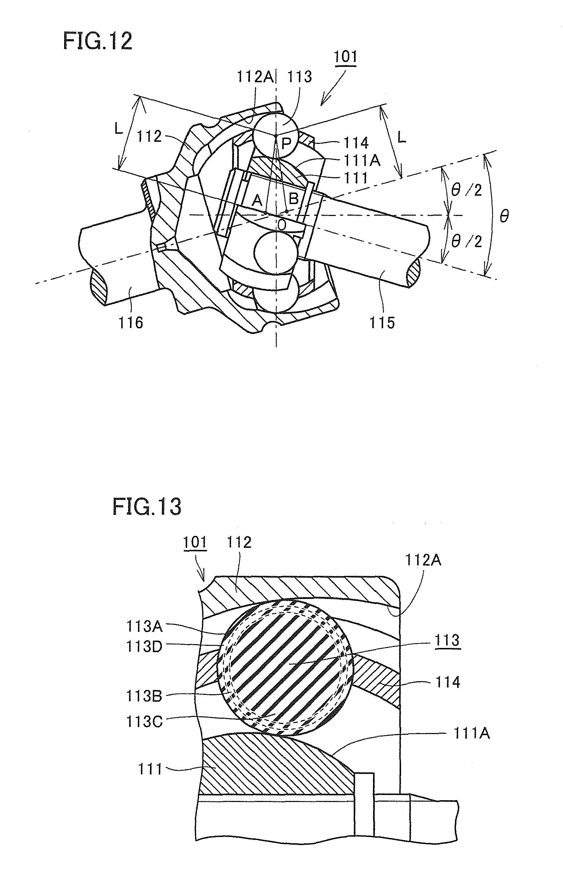

In the case where shafts 115 and 116 form an angle θ as shown in Fig. 12, ball 113 is guided by inner race ball groove 111A and outer race ball groove 112A with inner race center A and outer race center B as the center of curvature to be held at a position where its center P is located on the bisector of ∠ AOB. Since inner race ball groove 111A and outer race ball groove 112A are formed such that the distance from joint center O to inner race center A is equal to the distance from joint center O to outer race center B, the distance from center P of ball 113 to respective inner race center A and outer race center B is equal. Thus, triangle OAP is congruent to triangle OBP. As a result, the distances L from center P of ball 113 to shafts 115 and 116 are equal to each other, and when one of shafts 115 and 116 rotates about the axis, the other also rotates at constant velocity. Thus, fixed joint 101 can ensure constant velocity even in the state where shafts 115 and 116 constitute an angle. Cage 114 serves, together with inner race ball groove 111A and outer race ball groove 112A, to prevent ball 113 from jumping out of inner race ball groove 111A and outer race ball groove 112A when shafts 115 and 116 rotate, and also to determine joint center O of fixed joint 101.

In other words the third embodiment provides fixed joint 101 serving as a universal joint, including a race member implemented as outer race 112 connected to a first shaft member implemented as shaft 116, a torque transmission member implemented as ball 113 arranged in contact with outer race 112 and rollably and slidably on a surface of outer race ball groove 112A formed in outer race 112, and a second shaft member implemented as shaft 115 connected to shaft 116 via ball 113 and outer race 112. Furthermore, fixed joint 101 is a universal joint transmitting the rotation transmitted to one of shaft 116 and shaft 115 about an axis to the other of shaft 116 and shaft 115.

Furthermore, ball 113 is a torque transmission member for a universal joint, that is provided in the universal joint implemented as fixed joint 101, and is posed rollably and slidably between a race member implemented as outer race 112 connected to a first shaft member implemented as shaft 116 and a second shaft member implemented as shaft 115 and transmits the rotation transmitted to one of shaft 116 and shaft 115 about an axis to the other of shaft 116 and shaft 115.

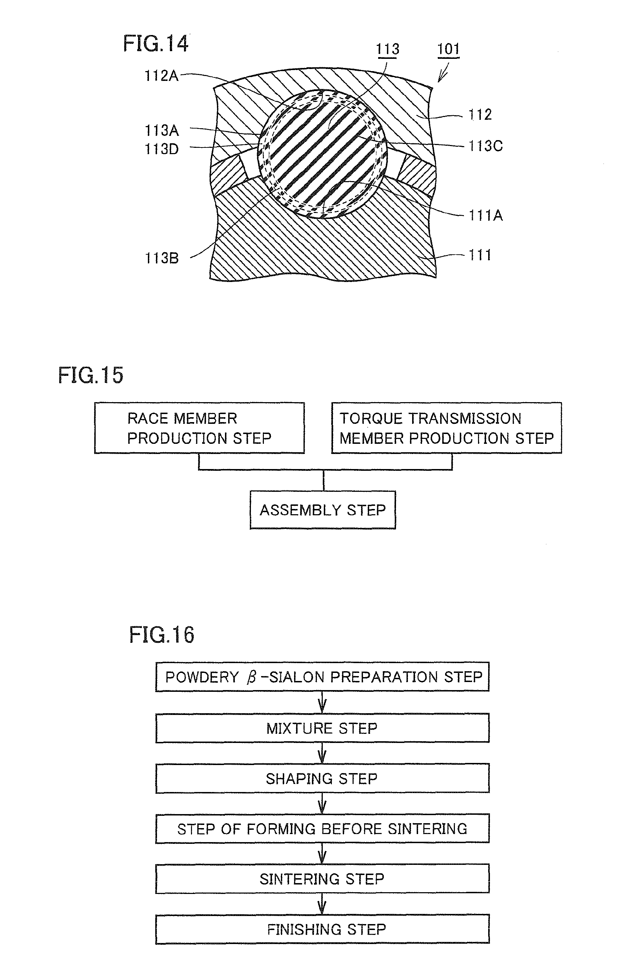

Herein, with reference to Figs. 13 and 14, the present embodiment provides a torque transmission member for a universal joint implemented as ball 113 formed of a sintered body that contains as a main component β-sialon represented by a compositional formula of Si_{6-Z}Al_{Z}O_{Z}N_{8-Z} and satisfying 0.5 ≤ z ≤ 3.0 and that has a remainder formed of an impurity. Furthermore, ball 113 has a contact surface, indicated as a ball contact surface 113A, included in a portion provided with a ball high density layer 113B higher in density than an inner portion 113C. When ball high density layer 113B is observed in cross section with an optical microscope with oblique illumination, it exhibits a portion white in color, hereinafter also referred to as a white color portion, having an area ratio equal to or smaller than 7%. The present embodiment thus provides fixed joint 101 that serves as a universal joint including a torque transmission member for a universal joint (ball 113) formed of a β-sialon sintered body inexpensive, capable of reliably ensuring sufficient durability, and usable in an application where an abruptly varying load is imposed thereon. The impurity includes an unavoidably introduced impurity including those derived from a source material or entering during the production process.

Note that in the present embodiment, the torque transmission member for a universal joint implemented as ball 113 may be formed of a sintered body that contains β-sialon as a main component and has a remainder formed of a sintering additive and an impurity. The sintering additive helps to reduce the sintered body in porosity and hence provide a universal joint including a torque transmission member for the universal joint formed of a β-sialon sintered body capable of reliably ensuring sufficient durability. The impurity includes an unavoidably introduced impurity including those derived from a source material or entering during the production process.

Furthermore, with reference to Fig. 13 and Fig. 14, ball high density layer 113B has a surface, or ball contact surface 113A, included in a portion provided with a ball higher density layer 113D further higher in density than another portion of ball high density layer 113B. When ball higher density layer 113D is observed in cross section with an optical microscope with oblique illumination, it exhibits a white color portion having an area ratio equal to or smaller than 3.5%. Ball 113 is thus further improved in durability against rolling and sliding contact fatigue.

The following will describe a method for producing a torque transmission member for a universal joint and the universal joint in the third embodiment serving as one embodiment of the present invention. With reference to Fig. 15, in the present embodiment, a universal joint is produced in a method, as follows. Initially, a race member is produced in a race member production step and a torque transmission member is produced in a torque transmission member production step. More specifically the race member production step is performed to produce inner race 111, outer race 112 and the like. The torque transmission member production step is performed to produce ball 113 and the like.

Then an assembly step is performed to combine the race member produced in the race member production step and the torque transmission member produced in the torque transmission member production step together to assemble a universal joint. More specifically, for example, inner race 111 and outer race 112, ball 113, and cage 114 separately prepared and other components are combined together to assemble fixed joint 101. The torque transmission member production step is performed for example in accordance with a method of producing a torque transmission member for a universal joint, as will be described hereinafter.

With reference to Fig. 16, in the present embodiment, a torque transmission member for a universal joint is produced in a method, as follows. Initially, powdery β-sialon is prepared in a powdery β-sialon preparation step. The powdery β-sialon preparation step can be performed for example with combustion synthesis adopted in a production step to inexpensively produce powder of β-sialon represented by a compositional formula of Si_{6-Z}Al_{Z}O_{Z}N_{8-Z} and satisfying 0.5 ≤ z ≤ 3.0.

A mixture step is then performed to add a sintering additive to the powdery β-sialon prepared in the powdery β-sialon preparation step and mix them together. The mixture step can be omitted if the sintering additive is not added.

Then, with reference to Fig. 16, a shaping step is performed to shape the powdery β-sialon or the mixture of the powdery β-sialon and the sintering additive generally into the geometry of the torque transmission member for a universal joint. More specifically, the powdery β-sialon or the mixture of the powdery β-sialon and the sintering additive is press-formed, cast-molded, extrusion-formed, rolling-granulated, or similarly shaped to provide a body shaped generally into the geometry of the torque transmission member for a universal joint implemented as ball 113, and the like.

The step of forming before sintering is then performed to form a surface of the shaped body to allow the shaped body that has been sintered to have a geometry closer to that of a torque transmission member for a universal joint as desired. More specifically, green body forming or a similar forming technique is used to process the shaped body so that the shaped body having been sintered can have a geometry closer to that of ball 113 or the like. The step of forming before sintering can be omitted if the shaping step provides a shaped body in a condition allowing the shaped body that has been sintered to have a geometry sufficiently close to that of a torque transmission member for a universal joint as desired.

Then, with reference to Fig. 16, a sintering step is performed to sinter the shaped body. More specifically, the shaped body is for example heated with a heater, a microwave, a millimeter wave or a similar electromagnetic wave and thus sintered at a pressure equal to or smaller than 1 MPa to provide a sintered body generally having a geometry of ball 113 or the like. The shaped body is sintered by being heated in an atmosphere of an inert gas or that of a gaseous mixture of nitrogen and oxygen to a range of 1550°C to 1800°C. The inert gas can be helium, neon, argon, nitrogen or the like. In view of production cost reduction, nitrogen is preferably adopted.

Then the sintered body produced in the sintering step has a surface worked to remove a portion including that surface, i.e., it is worked for finish, to complete a torque transmission member for a universal joint, i.e., a finishing step is performed. More specifically, the sintered body produced in the sintering step has a surface polished to complete a torque transmission member for a universal joint implemented as ball 113 and the like. Through the above steps the torque transmission member for a universal joint in the present embodiment completes.

As a result of the sintering step, in the sintered body at a portion from its surface to a depth of approximately 500 µm, there is formed a high density layer higher in density than an inner portion and having a portion white in color, or a white color portion, as observed in cross section with an optical microscope with oblique illumination, having an area ratio equal to or smaller than 7%. Furthermore, the sintered body has, at a portion from its surface to a depth of approximately 150 µm, a higher density layer further higher in density than the other portion of the high density layer and having a portion white in color, or a white color portion, as observed in cross section with an optical microscope with oblique illumination, having an area ratio equal to or smaller than 3.5%. Accordingly in the finishing step the sintered body is removed preferably by a thickness equal to or smaller than 150 µm in a portion that should serve as a contact surface in particular. This allows the higher density layer to remain in a portion including ball contact surface 113A to provide the torque transmission member for the universal joint with improved durability against rolling and sliding contact fatigue.

Note that the step of sintering the shaped body is performed preferably at a pressure equal to or larger than 0.01 MPa to reduce or prevent decomposition of β-sialon, and more preferably at a pressure equal to or larger than the atmospheric pressure when cost reduction is considered. Furthermore, to provide the high density layer while reducing production cost, the step of sintering the shaped body is performed preferably at a pressure equal to or smaller than 1 MPa.

### Fourth Embodiment

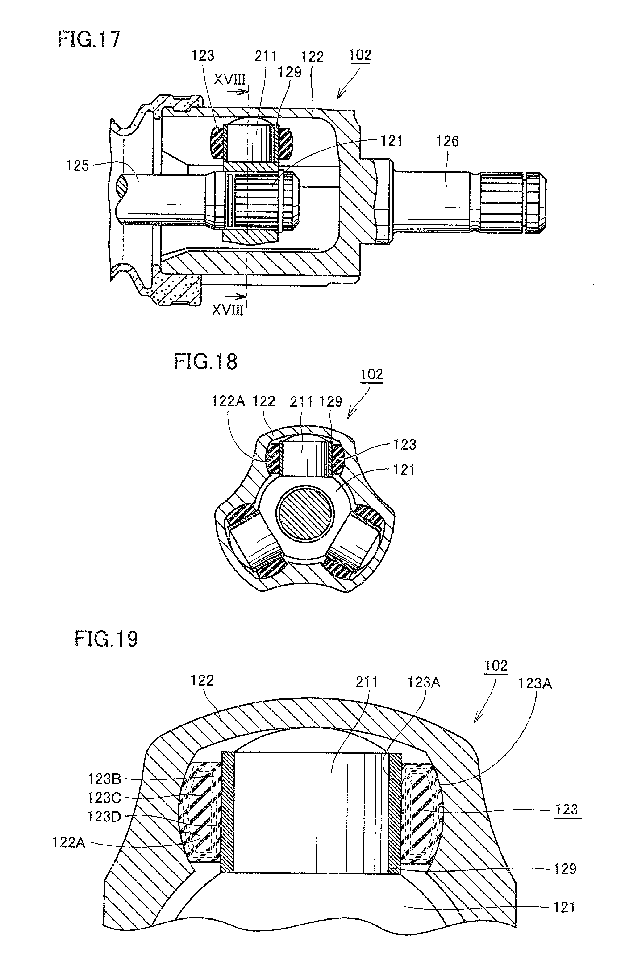

The present invention in a fourth embodiment provides a universal joint implemented as a tripod joint configured as will be described hereinafter. With reference to Fig. 17 to Fig. 19, the fourth embodiment provides a tripod joint 102 basically similar in configuration and effect to fixed joint 101 of the third embodiment. However, the former is different from the latter in how the race member and the torque transmission member are configured. More specifically, tripod joint 102 includes a tripod 121 that has a tripod shaft 211 extending in a single plane in three directions and is connected to a second shaft member implemented as a shaft 125, a race member implemented as an outer race 122 arranged to surround tripod 121 and connected to a first shaft member implemented as a shaft 126, and a torque transmission member implemented as an annular spherical roller 123 attached to tripod shaft 211 via a needle roller 129 rollably and having an outer circumferential surface having a spherical roller contact surface 123A in contact with a surface of an outer race groove 122A formed in an inner circumferential surface of outer race 122.

Thus in tripod joint 102 when one of shafts 125, 126 receives rotation about an axis the rotation can be transmitted via tripod 121, outer race 122 and spherical roller 123 to the other of shafts 125, 126 at a constant velocity and shafts 125, 126 can also move relative to each other in an axial direction passing through the center of shafts 125, 126.

In other words the fourth embodiment provides tripod joint 102 serving as a universal joint, including a race member implemented as outer race 122 connected to a first shaft member implemented as shaft 126, a torque transmission member implemented as spherical roller 123 arranged in contact with outer race 122 and rollably and slidably on a surface of outer race groove 112A formed in outer race 122, and a second shaft member implemented as shaft 125 connected to shaft 126 via spherical roller 123 and outer race 122. Furthermore, tripod joint 102 is a universal joint transmitting the rotation transmitted to one of shaft 126 and shaft 125 about an axis to the other of shaft 126 and shaft 125.

Furthermore, spherical roller 123 is a torque transmission member for a universal joint, that is provided in the universal joint implemented as tripod joint 102, and is posed rollably and slidably between a race member implemented as outer race 122 connected to a first shaft member implemented as shaft 126 and a second shaft member implemented as shaft 125 and transmits the rotation transmitted to one of shaft 126 and shaft 125 about an axis to the other of shaft 126 and shaft 125.

Herein, with reference to Fig. 18 and Fig. 19, the present embodiment provides a torque transmission member for a universal joint, that is implemented as spherical roller 123, which corresponds to ball 113 of the third embodiment, is formed of similar β sialon sintered body, and similarly has an inner portion 123C, a high density layer (a spherical roller high density layer 123B) and a higher density layer (a spherical roller higher density layer 123D). Thus the present embodiment provides tripod joint 102 that is a universal joint including a torque transmission member for a universal joint (spherical roller 123) formed of a β-sialon sintered body inexpensive, capable of reliably ensuring sufficient durability, and usable in an application where an abruptly varying load is imposed thereon. Note that the universal joint implemented in the fourth embodiment as tripod joint 102 and the torque transmission member implemented in the same embodiment for the universal joint as spherical roller 123 that tripod joint 102 includes can be produced similarly as they are produced in the third embodiment.

Note that while in the above embodiment the present universal joint is exemplified by a fixed joint and a tripod joint, the present universal joint is not limited thereto. For example, the universal joint may be a double offset joint (DOJ), a free ring tripod joint (FTJ), a cross groove joint (LJ) or the like.

The present universal joint may have its race member formed of a material which is not particularly limited. For example it may specifically be Japanese Industrial Standard (JIS) S53C or similar carbon steel, SCr420, SCM420 or a similar carburizing steel. Furthermore, the present universal joint may have its race member formed of a material of ceramics such as silicon nitride and sialon (including β-sialon).

### Example 1

Hereinafter, an example 1 of the present invention will be described. For a relation between a z value and rolling contact fatigue life (durability), a test was conducted to inspect rolling bearings fabricated to have rolling elements formed of β-sialon sintered bodies having various z values. The test was conducted in the following procedure.

Explained first is a method for fabricating the test bearings subjected to the test. Initially, combustion synthesis was employed to prepare powdery β-sialon having a z value falling within the range of 0.1 to 4. From the powdery β-sialon, a rolling element having a z value falling within the range from 0.1 to 4 was fabricated using a method basically similar to that of producing a rolling element as described in the first embodiment with reference to Fig. 7. More specifically, it was produced in a method, as follows. Initially, powder of β-sialon in the form of fine, submicron grains and a sintering additive of aluminum oxide (AKP30 produced by Sumitomo Chemical Co., Ltd) and yttrium oxide (yttrium oxide grade C produced by H. C. Starck) were wet-mixed using a ball mill. Subsequently, a spray dryer was used to granulate the intermediate product to produce granulated powder. The granulated powder was introduced in a die and thus shaped in the form of sphere, and furthermore, a cold isostatical press (CIP) was employed to apply pressure to obtain a spherically shaped body.

Then the shaped body was subjected to pressureless sintering as primary sintering and was thereafter subjected to HIP (Hot Isostatic Press) in an atmosphere of nitrogen at a pressure of 200 MPa to produce a sintered spherical body. Then the sintered spherical body is lapped to be a 3/8 inch ceramic ball (JIS grade: G5). It was then combined with a separately prepared bearing ring of bearing steel (JIS SUJ2) to produce a bearing of JIS type number 6206 (examples A-F of the present invention, reference examples A and B, and comparative examples B and C). For comparison, a rolling element formed of silicon nitride, i.e., a rolling element having a z value of 0 was also fabricated using a method similar to that of producing a rolling element formed of β-sialon, and was similarly incorporated into a bearing (a comparative example A).

The test was conducted in the following conditions. A bearing of JIS type number 6206 produced as described above underwent a fatigue test such that it experienced a maximum contact pressure Pmax of 3.2 GPa and was rotated at 2000 rpm, using a lubricant of turbine oil VG68 (clean oil) circularly fed, and thus tested at room temperature. A vibration detector was employed to monitor how the bearing in operation vibrates, and after the bearing had a rolling element damaged when the bearing's vibration exceeds a predetermined value, the test was stopped, and a period of time having elapsed since the bearing started to operate until the test was stopped was recorded as the bearing's life. After the test was stopped, the bearing was disassembled to see how the rolling element was damaged.

**Table 1**

| | comp. ex A | ref. ex. A | ex. A | ex. B | ex. C | ex. D | ex. E | ex. F | ref. ex. B | comp. ex B | comp. ex C |
|---|---|---|---|---|---|---|---|---|---|---|---|
| z value | 0 (silicon nitride) | 0.1 | 0.5 | 1 | 1.5 | 2 | 2.5 | 3 | 3.5 | 3.8 | 4 |
| life ratio | 1 | 1.05 | 1.05 | 1.05 | 1.01 | 0.99 | 0.95 | 0.9 | 0.74 | 0.12 | < 0.05 |
| type of damage | flaking | flaking | flaking | flaking | flaking | flaking | flaking | flaking | flaking (slightly worn) | flaking (worn) | worn |

Table 1 shows results of the test in the present example. In table 1, each life of the examples of the present invention, the reference examples and the comparative examples is presented with a ratio of life, assuming the life of comparative example A (silicon nitride) as 1. Types of damage described therein are "flaking" and "worn". The "flaking" represents a case where flakes came off from a surface of a rolling element, whereas the "worn" represents a case where the surface was worn without generation of flakes and the test was stopped.

Referring to table 1, examples A-F of the present invention and reference examples A and B each having a z value of 0.1 or greater but 3.5 or smaller achieved lives as good as that of the one formed of silicon nitride (comparative example A). The type of damage for them was "flaking" as with the one formed of silicon nitride. In contrast, comparative example B, in which the z value exceeds 3.5 to fall out of the range of the present invention, provided a drastically decreased life and it was observed that the rolling element thereof was worn. In other words, it is considered that in comparative example B in which the z value was 3.8, the rolling element was worn to provide a drastically decreased life although flakes were generated in the rolling element thereof in the end. Further, in comparative example C in which the z value was 4, the rolling element was worn in a very short period of time, resulting in drastically decreased durability of the rolling bearing.

As described above, each rolling bearing having a rolling element formed of a sialon sintered body having a z value of 0.1 or greater but 3.5 or smaller has durability substantially equivalent to that of a rolling bearing having a rolling element formed of a sintered body formed of silicon nitride. In contrast, when the z value exceeds 3.5, the rolling element is likely to be worn, resulting in a significantly decreased rolling contact fatigue life. Further, when the z value is larger, the type of damage of the rolling element formed of β-sialon is changed from "flaking" to "worn", thus apparently resulting in a drastically decreased rolling contact fatigue life. As such, it has been confirmed that when the z value is set at 0.1 or greater but 3.5 or smaller, there can be provided a rolling bearing including a rolling element formed of a β-sialon sintered body inexpensive and capable of reliably ensuring sufficient durability.

Referring to table 1, reference example B having a z value exceeding 3, more specifically, a z value of 3.5, had the rolling element slightly worn, and also provided life shorter than those of examples A-F of the present invention. Hence, it can be said that the z value is desirably set at 3 or smaller to ensure sufficient durability more reliably.

### Example 2

Hereinafter an example 2 of the present invention will be described. For a relation between a z value in an environment where impact acts on rolling bearings fabricated to have rolling elements formed of β-sialon sintered bodies having various z values and rolling contact fatigue life, a test was conducted to inspect the rolling bearings. The test was conducted in the following procedure.

Explained first is a method for fabricating the test bearings subjected to the test. Initially, combustion synthesis was employed to prepare powdery β-sialon having a z value falling within the range of 0.1 to 3.5. From the powdery β-sialon, rolling elements having z values falling within the range from 0.1 to 3.5 were produced using a method similar to that described in example 1. They were then combined with separately prepared bearing rings formed with a variety of steel materials used as a source material to produce bearings of JIS type number 6206 (comparative examples B-E, and examples A-F of the present invention). Bearing rings were formed of steels of JIS SUJ2, SCM420, SCr420, S53C, S45C, S40C, and AISI M50. For comparison, a rolling element formed of silicon nitride, i.e., a rolling element having a z value of 0 was also fabricated using a method similar to that of producing a rolling element formed of β-sialon, and was similarly incorporated into a bearing (comparative example A).

The test was conducted in the following conditions. A bearing of JIS type number 6206 produced as described above underwent a vibration impact fatigue test such that it experienced a maximum contact pressure Pmax of 2.5 GPa and was rotated at 500 rpm, using a lubricant of turbine oil VG68 circularly fed, under a vibration condition: 2,500 N (50Hz), and thus tested at room temperature. A vibration detector was employed to monitor how the bearing in operation vibrates, and after the bearing was damaged when the bearing's vibration exceeds a predetermined value, the test was stopped, and a period of time having elapsed since the bearing started to operate until the test was stopped was recorded as the bearing's life. After the test was stopped, the bearing was disassembled to see how it was damaged.

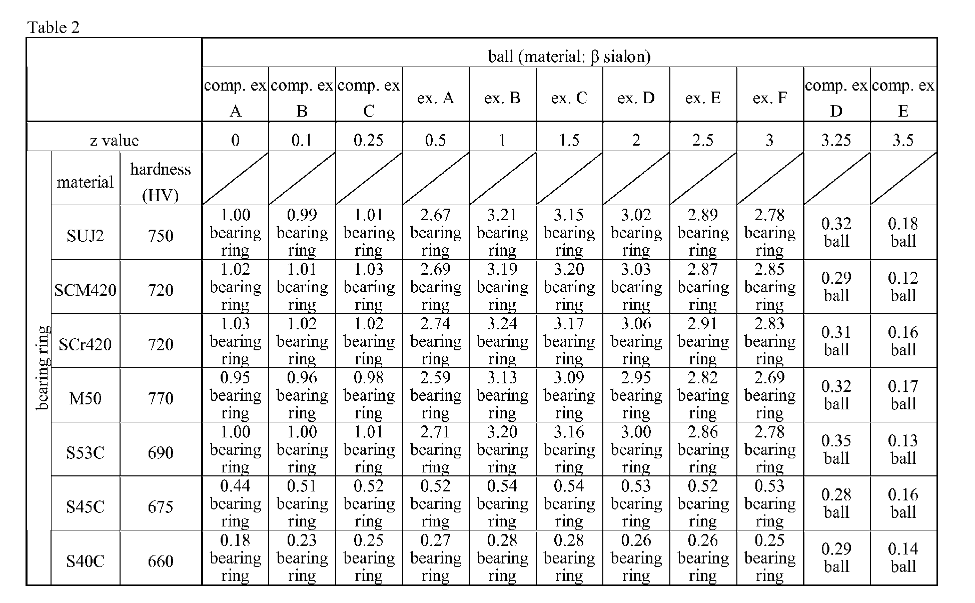

Table 2 shows results of the test in the present example. In table 2, each cell indicates at an upper portion each life of the examples of the present invention and the comparative examples with a ratio of life, assuming that the life of comparative example A (silicon nitride) with the bearing ring formed of SUJ2 is 1. Furthermore, each cell indicates at a lower portion a damaged component of the bearing (i.e., a bearing ring or a ball).

Referring to table 2, obviously, examples A-F of the present invention each having a z value of 0.5 or greater but 3.0 or smaller had longer life than the one formed of silicon nitride (comparative example A). As shown in Fig. 2, examples A-F of the present invention were damaged at the race member (or the bearing ring), as was that of silicon nitride, and their type of damage was "flaking". In contrast, comparative examples D and E, in which the z value exceeds 3.0 to fall out of the range of the present invention, provided a drastically decreased life and their rolling elements (or balls) were first damaged (flaked). Further, in comparative example D in which the z value was 3.25, it is believed that the impact affected to damage the bearing component (the ball) formed of β sialon sintered body, resulting in a significantly decreased life. Further, in comparative example E in which the z value was 3.5, the rolling element was flaked in a further shorter period of time, resulting in drastically decreased durability of the rolling bearing.

On the other hand, comparative examples B and C having z values smaller than 0.5 and thus departing from the present invention had lives decreased to a level approximately equal to that of comparative example A, and they had the race members first damaged (or flaked). In other words, comparative example C having a z value of 0.25 has a reduced difference in physical property from comparative example A having a z value of 0 (silicon nitride). Accordingly, in the former, as a ball of β sialon sintered body collides against a race member opposing the ball, the race member is exclusively damaged, and it is thus conceived that comparative examples B and C thus had lives decreased to the level of comparative example A adopting a ball of sintered body of silicon nitride.

Furthermore, with reference to table 2, a z value ranging from 0.5 to 3.0, i.e., the range of the present invention, with a bearing ring opposed thereto having a hardness (a surface hardness) smaller than HV 680, has a tendency to provide shorter life than when the bearing ring has a hardness equal to or larger than HV 680. This is probably because when the bearing ring has small hardness, and a ball of β sialon sintered body collides against the race member opposed thereto, the race member is more damageable.

Thus a z value exceeding 3.0 renders damageable a bearing component per se formed of β sialon sintered body, whereas a z value smaller than 0.5 increases contact pressure between the bearing component and a mating member and the mating member is thus damageable. A z value ranging from 0.5 to 3.0 ensures balance between the strength of a material constituting a bearing component and reduction in contact pressure between such bearing components. As a result it has been confirmed that a rolling bearing including a bearing component formed of β sialon sintered body achieves an increased life in an environment in which an abruptly varying load is imposed thereon. In particular, when one of the race member and the rolling element is a bearing component formed of a β sialon sintered body and the other is a bearing component formed of steel, the race member's physical property and the rolling element's physical property appropriately match, which can reduce/prevent damage caused by impact, vibration and the like. It has thus been confirmed that by providing a z value of at least 0.5 and at most 3.0, there can be provided a rolling bearing including a bearing component formed of a β-sialon sintered body inexpensive, capable of reliably ensuring sufficient durability, and usable in an application where an abruptly varying load is imposed thereon.

Furthermore, when one of the race member and the rolling element is a bearing component formed of a β sialon sintered body and the other is a bearing component formed of steel, it has been confirmed that it is preferable that the bearing component formed of steel have a surface with a hardness equal to or larger than HV 680 to reduce/prevent damage thereto.

### Example 3

Hereinafter an example 3 of the present invention will be described. For a relation between a z value and durability against rolling and sliding contact fatigue, a test was conducted to inspect specimens formed of β-sialon sintered bodies having various z values. The test was conducted in the following procedure.

Explained first is a method for fabricating the specimens subjected to the test. Initially, combustion synthesis was employed to prepare powdery β-sialon having a z value falling within the range of 0.1 to 4. From the powdery β-sialon, a specimen having a z value falling within the range from 0.1 to 4 was prepared using a method similar to that of producing a torque transmission member for a universal joint as described in the third embodiment with reference to Fig. 16. More specifically, it was produced in a method, as follows. Initially, powder of β-sialon in the form of fine, submicron grains and a sintering additive of aluminum oxide (AKP30 produced by Sumitomo Chemical Co., Ltd) and yttrium oxide (yttrium oxide grade C produced by H. C. Starck) were wet-mixed using a ball mill. Subsequently, a spray dryer was used to granulate the intermediate product to produce granulated powder. The granulated powder was introduced in a die and thus shaped in the form of cylinder, and furthermore, a cold isostatical press (CIP) was employed to apply pressure to obtain a cylindrically shaped body.

Then the shaped body was subjected to pressureless sintering as primary sintering and was thereafter subjected to HIP in an atmosphere of nitrogen at a pressure of 200 MPa to produce a sintered cylindrical body. Then the sintered cylindrical body had an outer circumferential surface lapped to be a cylindrical specimen having a diameter φ of 40 mm. For comparison, a specimen formed of silicon nitride, i.e., a specimen having a z value of 0 was also prepared using a method similar to that of producing a specimen formed of β-sialon (comparative example A).

The test was conducted in the following conditions. Each specimen prepared as described above was brought into contact with a separately prepared another specimen formed of bearing steel (JIS SUJ2) (in the form of a cylinder having a diameter φ of 40 mm and having been quench-hardened) with their outer circumferential surfaces receiving a maximum contact pressure Pmax of 2.5 GPa such that they had their respective axes in parallel. The specimen to be tested was rotated at 3,000 rpm about its axis and the other specimen was rotated about its axis to slide relative to the specimen to be tested at a rate of 5%. With a lubricant of turbine oil VG68 (clean oil) fed via a pat, and at room temperature, each specimen was continuously rotated. A rolling and sliding fatigue test (a two-cylinder test) was thus conducted. A vibration detector was employed to monitor how the specimen in operation vibrates, and after the specimen was damaged when the specimen's vibration exceeds a predetermined value, the test was stopped, and a period of time having elapsed since the specimen started to operate until the test was stopped was recorded as the specimen's life. After the test was stopped, how the specimen was damaged was observed.

**Table 3**

| | comp. ex A | ref. ex. A | ex. A | ex. B | ex. C | ex. D | ex. E | ex. F | ref. ex. B | comp. ex B | comp. ex C |
|---|---|---|---|---|---|---|---|---|---|---|---|
| z value | 0 (silicon nitride) | 0.1 | 0.5 | 1 | 1.5 | 2 | 2.5 | 3 | 3.5 | 3.8 | 4 |
| life ratio | 1 | 1.03 | 1.04 | 1.03 | 1.02 | 0.99 | 0.96 | 0.93 | 0.79 | 0.16 | < 0.05 |
| type of damage | flaking | flaking | flaking | flaking | flaking | flaking | flaking | flaking | flaking (slightly worn) | flaking (worn) | worn |

Table 3 shows a result of testing the present example. In table 3, each life of the examples of the present invention, the reference examples and the comparative examples is presented with a ratio of life, assuming the life of comparative example A (silicon nitride) as 1. Types of damage described therein are "flaking" and "worn". The "flaking" represents a case where flakes came off from a surface of a specimen, whereas the "worn" represents a case where the surface was worn without generation of flakes and the test was stopped.

Referring to table 3, examples A-F of the present invention and reference examples A and B each having a z value of 0.1 or greater but 3.5 or smaller achieved lives as good as that of the one formed of silicon nitride (comparative example A). The type of damage for them was "flaking" as with the one formed of silicon nitride. In contrast, comparative example B, in which the z value exceeds 3.5 to fall out of the range of the present invention, provided a drastically decreased life and it was observed that the specimen thereof was worn. In other words, it is considered that in comparative example B in which the z value was 3.8, the specimen was worn to provide a drastically decreased life although flakes were generated in the specimen thereof in the end. Further, in comparative example C in which the z value was 4, the specimen was worn in a very short period of time, resulting in drastically decreased durability.

As described above, a specimen formed of a sialon sintered body having a z value of 0.1 or greater but 3.5 or smaller has durability substantially equivalent to that of a specimen formed of a sintered body formed of silicon nitride. In contrast, when the z value exceeds 3.5, the specimen is likely to be worn, resulting in a significantly decreased durability against rolling and sliding contact fatigue. Further, when the z value is larger, the type of damage of the specimen formed of β-sialon is changed from "flaking" to "worn", thus apparently resulting in a drastically decreased durability against rolling and sliding contact fatigue. As such, it has been confirmed that when the z value is set at 0.1 or greater but 3.5 or smaller, there can be provided a universal joint including a torque transmission member formed of a β-sialon sintered body inexpensive and capable of reliably ensuring sufficient durability.

Referring to table 3, reference example B having a z value exceeding 3, more specifically, a z value of 3.5, had its specimen slightly worn, and also provided life shorter than those of examples A-F of the present invention. Hence, it can be said that the z value is desirably set at 3 or smaller to ensure sufficient durability more reliably.

According to the result of the test, in order to achieve durability (life) equivalent to or better than that of the torque transmission member formed of silicon nitride, the z value is preferably set at 2 or smaller, more preferably at 1.5 or smaller. For easiness of production of powdery β-sialon using a production process employing combustion synthesis, it is preferable to set the z value at 0.5 or greater because reaction by self-heating can be expected sufficiently with such a z value.

### Example 4

Hereinafter an example 4 of the present invention will be described. Universal joints having torque transmission members formed of β sialon sintered body having different z values were fabricated and subjected to a torsional impact test to examine a relationship between a z value and durability when the universal joints experienced abrupt torsion (torsional impact). The test was conducted in the following procedure.

Explained first is a method for fabricating a universal joint subjected to the test. Initially, combustion synthesis was employed to prepare powdery β-sialon having a z value falling within the range of 0.1 to 3.5. From the powdery β-sialon, a torque transmission member (a ball having a diameter of 17/32 inches (JIS: G20)) having a z value falling within the range from 0.1 to 3.5 was produced using a method similar to that described in example 3. It was then combined with separately prepared race members formed with a variety of steel materials used as a source material to produce constant velocity joints (type number: EUJ82) (comparative examples B-E, and examples A-F of the present invention). The race members were formed of steels of JIS SUJ2, SCM420, S53C, S45C, and S40C. For comparison, a ball formed of silicon nitride, i.e., a ball having a z value of 0 was also produced using a method similar to that of producing a ball formed of β-sialon as described above, and was similarly incorporated into a constant velocity joint (comparative example A).

The test was conducted in the following conditions. A constant velocity joint of type number EUJ82 produced as described above underwent a torsional impact test such that it was coupled with a fly wheel and rotated, and braked in one stroke. This test for example simulates a case in which a vehicle having a constant velocity joint is suddenly stopped. After the test, the constant velocity joint was disassembled to see how it was damaged.

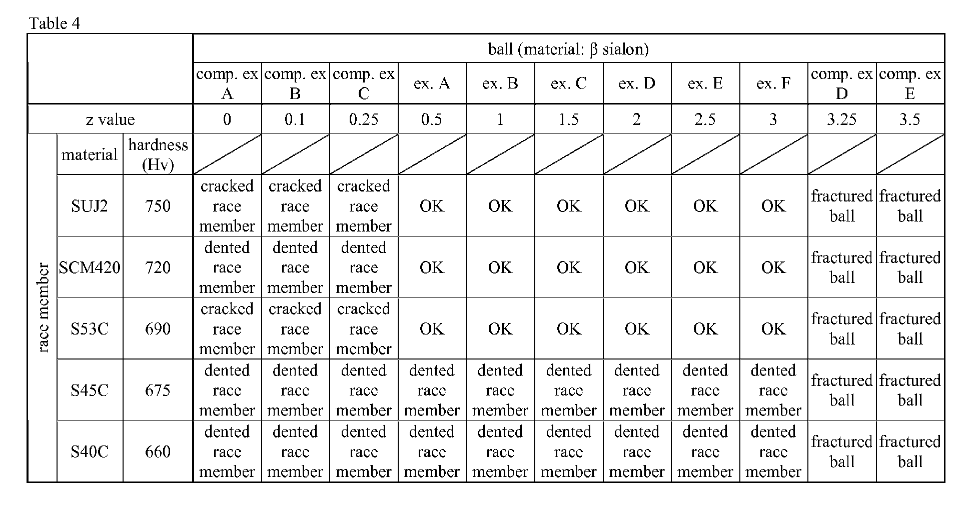

Table 4 shows results of the test in the present example. In Table 4, when a race member or a ball was damaged, how it was damaged is indicated in the corresponding cell at an upper portion, and which component (of the race member and the ball) was damaged is indicated in the corresponding cell at a lower portion. Furthermore, when neither the race member nor the ball was damaged, the corresponding cell indicates "OK".

Referring to Table 4, examples A-F of the present invention each having a z value of 0.5 or greater but 3.0 or smaller, with a race member having a surface with a hardness equal to or larger than HV 680 (i.e., formed of SUJ2, SCM420, or S53C), had the race member and the ball both undamaged. While examples A-F of the present invention with a race member having a surface with a hardness smaller than HV 680 had the race member dented, the examples did not have the race member cracked or a ball fractured. In contrast, comparative examples D and E, in which the z value exceeds 3.0 to fall out of the range of the present invention, each had a ball fractured, regardless of the race member's material and surface hardness. In other words, comparative examples D and E, in which the z value is equal to or larger than 3.25, had a ball of a β sialon sintered body fractured as they experienced torsional impact.

On the other hand, comparative examples B and C having z values smaller than 0.5 and thus departing from the present invention had the race member dented by a ball, or fractured. In other words, comparative examples B and C having a z value equal to or smaller than 0.25 have a reduced difference in physical property from comparative example A having a z value of 0 (silicon nitride). Accordingly, in the former, as a ball of β sialon sintered body collides against a race member opposing the ball, the race member is exclusively damaged, and it is thus conceived that comparative examples B and C thus had the race member dented or cracked, as comparative example A adopting a ball of sintered body of silicon nitride did.

Furthermore, with reference to Table 4, a z value ranging from 0.5 to 3.0, i.e., the range of the present invention, with a race member having a hardness (a surface hardness) smaller than HV 680 opposed to a ball, resulted in the race member being dented. This is probably because when a ball of β sialon sintered body collides against a race member having small hardness, the race member is more damageable.

Thus a z value exceeding 3.0 renders damageable a torque transmission member per se formed of β sialon sintered body, whereas a z value smaller than 0.5 increases contact pressure between the torque transmission member and a mating member and the mating member is thus damageable. A z value ranging from 0.5 to 3.0 ensures balance between the strength of a material constituting the torque transmission member and reduction in contact pressure between the torque transmission member and the mating member. As a result it has been confirmed that a universal joint including a torque transmission member formed of β sialon sintered body exhibits enhanced durability in an environment in which an abruptly varying load is imposed thereon. In particular, when the race member is formed of steel, the race member's physical property and the torque transmission member's physical property appropriately match, which can reduce/prevent damage caused by impact, vibration and the like. It has thus been confirmed that by providing a z value of at least 0.5 and at most 3.0, there can be provided a universal joint including a torque transmission member formed of a β-sialon sintered body inexpensive, capable of reliably ensuring sufficient durability, and usable in an application where an abruptly varying load is imposed thereon.

Furthermore, when the race member is formed of steel, it has been confirmed that it is preferable that the race member have a surface with a hardness equal to or larger than HV 680 to reduce/prevent damage thereto.

### Example 5

Hereinafter an example 5 of the present invention will be described. A test was conducted to inspect how the bearing component and torque transmission member of the present invention have a high density layer and a higher density layer formed, as observed in cross section. The test was conducted in the following procedure.

Initially, combustion synthesis was employed to prepare powdery β-sialon (product name: Meramix, produced by Isman J Corporation) having a composition of Si₅AlON₇, and therefrom a specimen in the form of a cube having each side of approximately 10 mm was produced in a method similar to that of producing a bearing component as described in the first embodiment with reference to Fig. 7 and that of producing a torque transmission member as described in the third embodiment with reference to Fig. 16. More specifically, it was produced in a method, as follows. Initially, powder of β-sialon in the form of fine, submicron grains and a sintering additive of aluminum oxide (AKP30 produced by Sumitomo Chemical Co., Ltd) and yttrium oxide (yttrium oxide grade C produced by H. C. Starck) were wet-mixed using a ball mill. Subsequently, a spray dryer was used to granulate the intermediate product to produce granulated powder. The granulated powder was introduced in a die and thus shaped to have a predetermined geometry, and furthermore, a cold isostatical press (CIP) was employed to apply pressure to obtain a shaped body. Subsequently the shaped body was heated to 1650°C in an atmosphere of nitrogen of a pressure of 0.4 MPa and thus sintered to produce the above cubic specimen.

Subsequently, the specimen was cut and the cut surface was lapped with a diamond lap and thereafter mirror-lapped with a chromium oxide lap to obtain a cross section including a center of the cube for observation. The cross section was observed with an optical microscope (Microphoto-FXA produced by Nikon Corporation) with oblique illumination and imaged in an instant photograph (FP-100B produced by FUJIFILM Corporation) of a magnification of 50 times. Subsequently, the obtained photograph's image was taken in via a scanner (with a resolution of 300 dpi) to a personal computer. Image processing software (WinROOF produced by Mitani Corporation) was used to perform a binarization process by a brightness threshold value (in the present example, a binarizing separation threshold value: 140) to measure a white color portion for an area ratio.

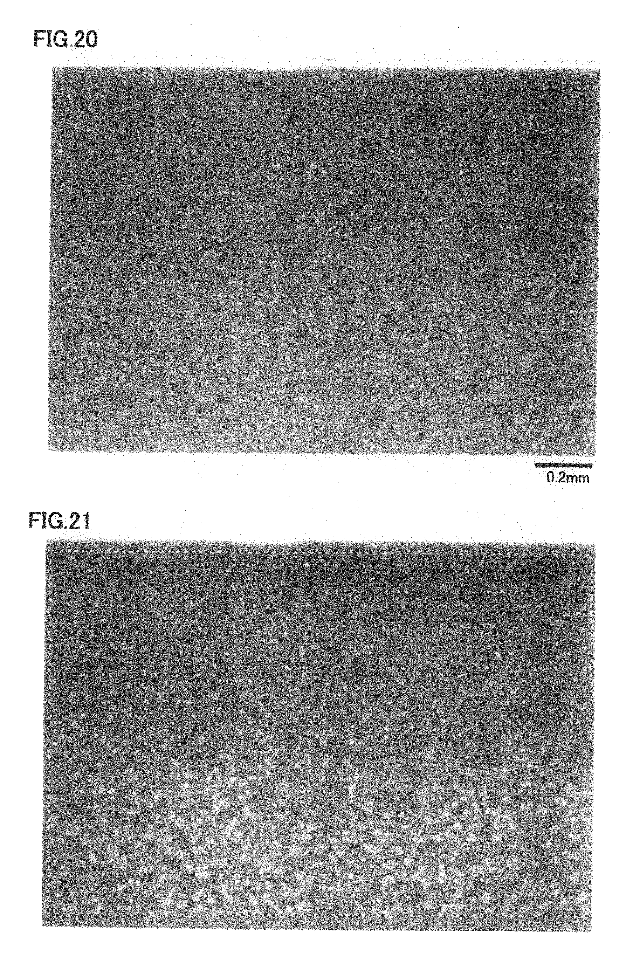

With reference to Figs. 20-22, the test provided a result, as follows: Note that Fig. 20 shows a photograph having an upper side showing a side of a specimen that is closer to a surface thereof, and a top end corresponding to the surface.

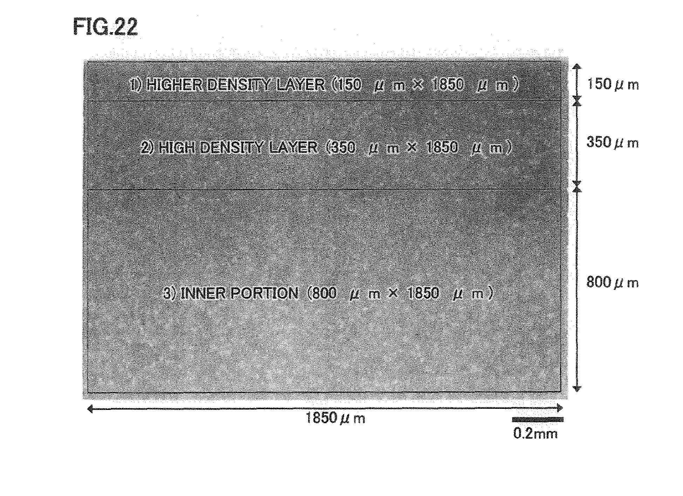

With reference to Fig. 20 and Fig. 21, it can be seen that a specimen in the present example produced in a method similar to that of producing the bearing component of the present invention had a layer having a white color portion less in a portion including a surface than in an inner portion. As shown in Fig. 22, a shot photograph's image was divided in accordance with a distance from an outermost surface of the specimen into three regions (i.e., a region from the outermost surface to a depth of 150 µm, a region that exceeds 150 µm and does not exceed 500 µm, and a region that exceeds 500 µm and does not exceed 800 µm), and each region was subjected to image analysis to calculate a white color portion for area ratio. A result shown in table 5 was obtained. In table 5, each region shown in Fig. 22 serves as one field of view, and from five randomly shot photographs, five fields of view were obtained. For each field, a white color portion was measured for area ratio, and their average and maximum values were indicated.

**Table 5**

| | Depth from Out-ermost Surface (µM) | Area Ratio of White Color Portion (%) | |
|---|---|---|---|
| | | Ave. of 5 Fields of View | Max. of 5 Fields of View |
| 1) Higher Density Layer | 150 | 1.2 | 3.5 |
| 2) High Density Layer | 150-500 | 3.7 | 7.0 |
| 3) Inner Portion | > 500 | 18.5 | 22.4 |

With reference to table 5, the present example provided a white color portion having an area ratio of 18.5% for an inner portion, and, in contrast, 3.7% for the region having a depth equal to or smaller than 500 µm from a surface, and 1.2% for the region having a depth equal to or smaller than 150 µm from the surface. It has been confirmed therefrom that a specimen produced in the present example in a method similar to that of producing the bearing component of the present invention had a high density layer and a higher density layer having a white color portion less in a portion including a surface than in an inner portion.

### Example 6

Hereinafter an example 6 of the present invention will be described. A test was conducted to confirm the rolling contact fatigue life of the bearing component of the present invention. The test was conducted in the following procedure.

Explained first is a method for fabricating the test bearings subjected to the test. Initially, combustion synthesis was employed to prepare powdery β-sialon (product name: Meramix, produced by Isman J Corporation) having a composition of Si₅AlON₇, and therefrom a 3/8 inch ceramic ball having a diameter of 9.525 mm was produced in a method similar to that of producing a bearing component, as described in the first embodiment with reference to Fig. 7. More specifically, it was produced in a method, as follows. Initially, powder of β-sialon in the form of fine, submicron grains and a sintering additive of aluminum oxide (AKP30 produced by Sumitomo Chemical Co., Ltd) and yttrium oxide (yttrium oxide grade C produced by H. C. Starck) were wet-mixed using a ball mill. Subsequently, a spray dryer was used to granulate the intermediate product to produce granulated powder. The granulated powder was introduced in a die and thus shaped to be a sphere, and furthermore, a cold isostatical press (CIP) was employed to apply pressure to obtain a spherically shaped body.

Then the shaped body was subjected to green body forming so that after it was sintered it had a predetermined working thickness. Subsequently the shaped body was heated to 1650°C in an atmosphere of nitrogen at a pressure of 0.4 MPa and thus sintered to produce a sintered spherical body. Then the sintered spherical body was lapped to be a 3/8 inch ceramic ball (a rolling element; JIS grade: G5). It was then combined with a separately prepared bearing ring of bearing steel (JIS SUJ2) to produce a bearing of JIS type number 6206. Herein, the sintered spherical body was lapped to have a thickness (or a working thickness) removed in 8 levels to produce 8 types of bearings (examples A-H of the present invention). In contrast, for comparison, silicon nitride and a sintering additive were used to provide a powdery source material which was in turn pressure-sintered to provide a sintered spherical body (EC141 produced by NGK Spark Plug Co. Ltd.) which was in turn lapped, similarly as described above, and combined with a separately prepared bearing ring of bearing steel (JIS SUJ2) to produce a bearing of JIS type number 6206 (comparative example A). It was lapped by a thickness of 0.25 mm.

The test was conducted in the following conditions. A bearing of JIS type number 6206 produced as described above underwent a fatigue test such that it experienced a maximum contact pressure Pmax of 3.2 GPa and was rotated at 2000 rpm, using a lubricant of turbine oil VG68 (clean oil) circularly fed, and thus tested at room temperature. A vibration detector was employed to monitor how the bearing in operation vibrates, and after the bearing had a rolling element damaged when the bearing's vibration exceeds a predetermined value, the test was stopped, and a period of time having elapsed since the bearing started to operate until the test was stopped was recorded as the bearing's life. Note that 15 bearings for each example of the present invention and the comparative example were tested and their L₁₀ lives were calculated and evaluated for durability by a life ratio in comparison with comparative example A.

**Table 6**

| | working thickness (mm) | L₁₀ life (hours) | life ratio |
|---|---|---|---|
| ex. A | 0.05 | 6492 | 3.19 |
| ex. B | 0.10 | 6387 | 3.14 |
| ex. C | 0.15 | 6404 | 3.15 |
| ex. D | 0.20 | 3985 | 1.96 |
| ex. E | 0.30 | 4048 | 1.99 |
| ex. F | 0.40 | 3945 | 1.94 |
| ex. G | 0.50 | 3069 | 1.51 |
| ex. H | 0.60 | 867 | 0.43 |
| comp. ex A | 0.25 | 2036 | 1.00 |

Table 6 shows results of the test in the present example. With reference to table 6, it can be said that the present examples provide bearings all having satisfactory lives with their production costs and the like considered. A working thickness set to be equal to or smaller than 0.5 mm to provide a rolling element having a surface with a high density layer remaining therein, i.e., the present invention in examples D-G, allows a bearing to have a life approximately 1.5-2 times that of comparative example A. Furthermore, a working thickness set to be equal to or smaller than 0.15 mm to provide a rolling element having a surface with a higher density layer remaining therein, i.e., the present invention in examples A-C, allows a bearing to have a life approximately 3 times that of comparative example A. It has thus been confirmed that a rolling bearing including the present bearing component is excellent in durability. Also, it has been found that a rolling bearing including the present bearing component with a working thickness set to be equal to or smaller than 0.5 mm to have a surface with a high density layer remaining therein can have an increased life and a rolling bearing including the present bearing component with a working thickness set to be equal to or smaller than 0.15 mm to have a surface with a higher density layer remaining therein can have a further increased life.

### Example 7

Hereinafter an example 7 of the present invention will be described. A test was conducted to confirm the durability of the present torque transmission member for a universal joint against rolling and sliding contact fatigue. The test was conducted in the following procedure.

Explained first is a method for preparing the specimens subjected to the test. Initially, combustion synthesis was employed to prepare powdery β-sialon (product name: Meramix, produced by Isman J Corporation) having a composition of Si₅AlON₇, and therefrom a specimen in the form of a cylinder of a diameter φ of 40 mm was produced in a method similar to that of producing a torque transmission member for a universal joint as described in the third embodiment with reference to Fig. 16. More specifically, it was produced in a method, as follows. Initially, powder of β-sialon in the form of fine, submicron grains and a sintering additive of aluminum oxide (AKP30 produced by Sumitomo Chemical Co., Ltd) and yttrium oxide (yttrium oxide grade C produced by H. C. Starck) were wet-mixed using a ball mill. Subsequently, a spray dryer was used to granulate the intermediate product to produce granulated powder. The granulated powder was introduced in a die and thus shaped to be a cylinder, and furthermore, a cold isostatical press (CIP) was employed to apply pressure to obtain a cylindrically shaped body.

Then the shaped body was subjected to green body forming so that after it was sintered it had a predetermined working thickness. Subsequently the shaped body was heated to 1650°C in an atmosphere of nitrogen at a pressure of 0.4 MPa and thus sintered to produce a sintered cylindrical body. Then the sintered cylindrical body had an outer circumferential surface lapped to be a cylindrical specimen having a diameter φ of 40 mm. Herein, the sintered cylindrical body was lapped to have a thickness (or a working thickness) removed in 8 levels to produce 8 types of specimens (examples A-H of the present invention). For comparison, silicon nitride and a sintering additive were used to provide a powdery source material which was in turn pressure-sintered to provide a sintered cylindrical body which was in turn lapped, similarly as described above, to provide a cylindrical specimen having a diameter φ of 40 mm (comparative example A). It was lapped by a thickness of 0.25 mm.

The test was conducted in the following conditions. Each specimen prepared as described above was brought into contact with a separately prepared another specimen formed of bearing steel (JIS SUJ2) (in the form of a cylinder having a diameter φ of 40 mm and having been quench-hardened) with their outer circumferential surfaces receiving a maximum contact pressure Pmax of 2.5 GPa such that they had their respective axes in parallel. The specimen to be tested was rotated at 3,000 rpm about its axis and the other specimen was rotated about its axis to slide relative to the specimen to be tested at a rate of 5%. With a lubricant of turbine oil VG68 (clean oil) fed via a pat, and at room temperature, each specimen was continuously rotated. A rolling and sliding fatigue test (a two-cylinder test) was thus conducted. A vibration detector was employed to monitor how the specimen in operation vibrates, and after the specimen was damaged when the specimen's vibration exceeds a predetermined value, the test was stopped, and a period of time having elapsed since the specimen started to operate until the test was stopped was recorded as the specimen's life. Note that 8 specimens for each example of the present invention and the comparative example were tested and their average lives were calculated and evaluated for durability by a life ratio in comparison with comparative example A.

**Table 7**

| | working thickness (mm) | life (hours) | life ratio |
|---|---|---|---|
| ex. A | 0.05 | 1789 | 5.08 |
| ex. B | 0.10 | 1762 | 5.01 |
| ex. C | 0.15 | 1783 | 5.07 |
| ex. D | 0.20 | 1068 | 3.03 |
| ex. E | 0.30 | 957 | 2.72 |
| ex. F | 0.40 | 829 | 2.36 |
| ex. G | 0.50 | 713 | 2.03 |
| ex. H | 0.60 | 321 | 0.91 |
| comp. ex A | 0.25 | 352 | 1.00 |

Table 7 shows results of the test in the present example. With reference to table 7, it can be said that the present examples provide specimens all having satisfactory lives with their production costs and the like considered. A working thickness set to be equal to or smaller than 0.5 mm to provide a specimen having a surface with a high density layer remaining therein, i.e., the present invention in examples D-G, allows the specimen to have a life approximately 2-3 times that of comparative example A. Furthermore, a working thickness set to be equal to or smaller than 0.15 mm to provide a specimen having a surface with a higher density layer remaining therein, i.e., the present invention in examples A-C, allows the specimen to have a life approximately 5 times that of comparative example A. It is conceived therefrom that a universal joint including the present torque transmission member for a universal joint is excellent in durability. Also, it is conceived that a universal joint including the present torque transmission member for a universal joint, with the torque transmission member having a working thickness set to be equal to or smaller than 0.5 mm to have a surface with a high density layer remaining therein, can have an increased life and that a universal joint including the present torque transmission member for a universal joint, with the torque transmission member having a working thickness set to be equal to or smaller than 0.15 mm to have a surface with a higher density layer remaining therein, can have a further increased life.

It should be understood that the embodiments and examples disclosed herein are illustrative and non-restrictive in any respect. The scope of the present invention is defined by the terms of the claims, rather than the description above, and is intended to include any modifications within the scope and meaning equivalent to the terms of the claims.

### INDUSTRIAL APPLICABILITY

A bearing component and a rolling bearing of the present invention are advantageously applicable particularly to a bearing component formed of a sintered body containing β-sialon as a main component and a rolling bearing including the bearing component. Furthermore, a torque transmission member for a universal joint and the universal joint in accordance with the present invention are advantageously applicable particularly to a torque transmission member provided for a universal joint and formed of a sintered body containing β-sialon as a main component, and a universal joint including the torque transmission member.

### DESCRIPTION OF THE REFERENCE SIGNS

1: deep groove ball bearing, 2: thrust needle roller bearing, 3: hub unit, 11: outer ring, 11A: outer ring raceway surface, 11B: outer ring high density layer, 11C, 12C, 13C: inner portion, 11D: outer ring higher density layer, 12: inner ring, 12A: inner ring raceway surface, 12B: inner ring high density layer, 12D: inner ring higher density layer, 13: ball, 13A: ball rolling contact surface, 13B: ball high density layer, 13D: ball higher density layer, 14, 24, 39A, 39B: cage, 21: bearing washer, 21A: bearing washer raceway surface, 21B: bearing washer high density layer, 21C, 23C: inner portion, 21D: bearing washer higher density layer, 23: needle roller, 23A: roller rolling contact surface, 23B: roller high density layer, 23D: roller higher density layer, 31: outer ring, 31A1, 31A2, 32A, 33A: raceway surface, 31B: outer ring high density layer, 31C, 32C, 33C, 34C: inner portion, 31D: outer ring higher density layer, 32: hub ring, 32B: hub ring high density layer, 32D: hub ring higher density layer, 33: inner ring, 33B: inner ring high density layer, 33D: inner ring higher density layer, 34: ball, 34A: ball rolling contact surface, 34B: ball high density layer, 34D: ball higher density layer, 35: hub ring flange, 35A: hub ring through hole, 36: bolt, 37: outer ring flange, 37A: outer ring through hole, 38: fixing ring, 39A, 39B: cage, 101: fixed joint, 102: tripod joint, 111: inner race, 111A: inner race ball groove, 112: outer race, 112A: outer race ball groove, 113: ball, 113A: ball contact surface, 113B: ball high density layer, 113C: inner portion, 113D: ball higher density layer, 114: cage, 115, 116: shaft, 121: tripod, 211: tripod shaft, 122: outer race, 122A: outer race groove, 123: spherical roller, 123A: spherical roller contact surface, 123B: spherical roller high density layer, 123C: inner portion, 123D: spherical roller higher density layer, 125, 126: shaft.

## Claims

1. A bearing component (11, 12, 21, 31, 32, 33, 13, 23, 34) in a rolling bearing (1, 2, 3), the bearing component (11, 12, 21, 31, 32, 33, 13, 23, 34) being one of a race member (11, 12, 21, 31, 32, 33) and a rolling element (13, 23, 34) disposed in contact with said race member (11, 12, 21, 31, 32, 33) on an annular raceway, the bearing component being formed of ceramic capable of reducing impact on another bearing component (11, 12, 21, 31, 32, 33, 13, 23, 34) more than silicon nitride.

2. The bearing component (11, 12, 21, 31, 32, 33, 13, 23, 34) according to claim 1, wherein said ceramic is formed of a sintered body that contains as a main component β-sialon represented by a compositional formula of Si_{6-Z}Al_{Z}O_{Z}N_{8-Z} and satisfying 0.5 ≤ z ≤ 3.0 and that has a remainder formed of an impurity.

3. The bearing component (11, 12, 21, 31, 32, 33, 13, 23, 34) according to claim 2, wherein the bearing component (11, 12, 21, 31, 32, 33, 13, 23, 34) has a raceway/rolling contact surface (11A, 12A, 21A, 31A1, 31A2, 32A, 33A, 13A, 23A, 34A) serving as a surface contacting said other bearing component (11, 12, 21, 31, 32, 33, 13, 23, 34), said raceway/rolling contact surface (11A, 12A, 21A, 31A1, 31A2, 32A, 33A, 13A, 23A, 34A) being included in a portion having a high density layer (11B, 12B, 21B, 31B, 32B, 33B, 13B, 23B, 34B) higher in density than an inner portion (11C, 12C, 21C, 31C, 32C, 33C, 13C, 23C, 34C).

4. The bearing component (11, 12, 21, 31, 32, 33, 13, 23, 34) according to claim 3, wherein when said high density layer (11B, 12B, 21B, 31B, 32B, 33B, 13B, 23B, 34B) is observed in cross section with an optical microscope with oblique illumination, said layer exhibits a portion observed as a portion white in color having an area ratio equal to or smaller than 7%.

5. The bearing component (11, 12, 21, 31, 32, 33, 13, 23, 34) according to claim 3, wherein said high density layer (11B, 12B, 21B, 31B, 32B, 33B, 13B, 23B, 34B) has a surface included in a portion having a higher density layer (11D, 12D, 21D, 31D, 32D, 33D, 13D, 23D, 34D) higher in density than another portion of said high density layer (11B, 12B, 21B, 31B, 32B, 33B, 13B, 23B, 34B).

6. The bearing component (11, 12, 21, 31, 32, 33, 13, 23, 34) according to claim 5, wherein when said higher density layer (11D, 12D, 21D, 31D, 32D, 33D, 13D, 23D, 34D) is observed in cross section with an optical microscope with oblique illumination, said layer exhibits a portion observed as a portion white in color having an area ratio equal to or smaller than 3.5%.

7. The bearing component (11, 12, 21, 31, 32, 33, 13, 23, 34) according to claim 1, wherein said ceramic is formed of a sintered body that contains as a main component β-sialon represented by a compositional formula of Si_{6-Z}Al_{Z}O_{Z}N_{8-Z} and satisfying 0.5 ≤ z ≤ 3.0 and that has a remainder formed of a sintering additive and an impurity.

8. The bearing component (11, 12, 21, 31, 32, 33, 13, 23, 34) according to claim 7, wherein the bearing component (11, 12, 21, 31, 32, 33, 13, 23, 34) has a raceway/rolling contact surface (11A, 12A, 21A, 31A1, 31A2, 32A, 33A, 13A, 23A, 34A) serving as a surface contacting said other bearing component (11, 12, 21, 31, 32, 33, 13, 23, 34), said raceway/rolling contact surface (11A, 12A, 21A, 31A1, 31A2, 32A, 33A, 13A, 23A, 34A) being included in a portion having a high density layer (11B, 12B, 21B, 31B, 32B, 33B, 13B, 23B, 34B) higher in density than an inner portion (11C, 12C, 21C, 31C, 32C, 33C, 13C, 23C, 34C).

9. The bearing component (11, 12, 21, 31, 32, 33, 13, 23, 34) according to claim 8, wherein when said high density layer (11B, 12B, 21B, 31B, 32B, 33B, 13B, 23B, 34B) is observed in cross section with an optical microscope with oblique illumination, said layer exhibits a portion observed as a portion white in color having an area ratio equal to or smaller than 7%.

10. The bearing component (11, 12, 21, 31, 32, 33, 13, 23, 34) according to claim 8, wherein said high density layer (11B, 12B, 21B, 31B, 32B, 33B, 13B, 23B, 34B) has a surface included in a portion having a higher density layer (11D, 12D, 21D, 31D, 32D, 33D, 13D, 23D, 34D) higher in density than another portion of said high density layer (11B, 12B, 21B, 31B, 32B, 33B, 13B, 23B, 34B).

11. The bearing component (11, 12, 21, 31, 32, 33, 13, 23, 34) according to claim 10, wherein when said higher density layer (11D, 12D, 21D, 31D, 32D, 33D, 13D, 23D, 34D) is observed in cross section with an optical microscope with oblique illumination, said layer exhibits a portion observed as a portion white in color having an area ratio equal to or smaller than 3.5%.

12. A rolling bearing (1, 2, 3) comprising:
a race member (11, 12, 21, 31, 32, 33); and
a plurality of rolling elements (13, 23, 34) disposed in contact with said race member (11, 12, 21, 31, 32, 33) on an annular raceway, at least one of said race member (11, 12, 21, 31, 32, 33) and said rolling element (13, 23, 34) being the bearing component (11, 12, 21, 31, 32, 33, 13, 23, 34) of claim 1.

13. The rolling bearing (1, 2, 3) according to claim 12, wherein:
one of said race member (11, 12, 21, 31, 32, 33) and said rolling element (13, 23, 34) is the bearing component (11, 12, 21, 31, 32, 33, 13, 23, 34) of claim 1;
the other of said race member (11, 12, 21, 31, 32, 33) and said rolling element (13, 23, 34) is a bearing component (11, 12, 21, 31, 32, 33, 13, 23, 34) formed of steel; and
said bearing component (11, 12, 21, 31, 32, 33, 13, 23, 34) formed of steel has a surface with a hardness equal to or larger than HV 680.
